# EUROPEAN PATENT APPLICATION

(11) **EP 4 318 406 A1**
(43) Date of publication of application: **07.02.2024**
(21) Application number: 22779589.5
(22) Date of filing: 14.02.2022
(51) Int. Cl.: G06T 15/20

(54) **IMAGE PROCESSING DEVICE, IMAGE PROCESSING METHOD, AND PROGRAM**

(30) Priority: 31.03.2021 JP 2021061676
(71) Applicant: FUJIFILM Corporation, Tokyo 106-8620 (JP)
(72) Inventor: MIYATA, Masahiko, Saitama-shi, Saitama 331-9624 (JP); AOKI, Takashi, Saitama-shi, Saitama 331-9624 (JP); HAYASHI, Kenkichi, Saitama-shi, Saitama 331-9624 (JP); MURAKAMI, Yasunori, Saitama-shi, Saitama 331-9624 (JP)
(74) Representative: Hughes, Andrea Michelle
(86) International application number: PCT/JP2022/005748
(87) International publication number: WO 2022/209362

(57) **Abstract**

An image processing apparatus includes a processor, and a memory connected to or built in the processor. The processor acquires a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and outputs data for displaying the representative image on a display in a size different from the virtual viewpoint moving image.

## Description

### BACKGROUND OF THE INVENTION

### 1. Field of the Invention

The technology of the present disclosure relates to an image processing apparatus, an image processing method, and a program.

### 2. Description of the Related Art

JP2018-046448A discloses an image processing apparatus that generates a free viewpoint video which is a video seen from a virtual camera from a multi-viewpoint video captured by using a plurality of cameras, the image processing apparatus comprising a user interface for a user to designate a camera path showing a track of movement of the virtual camera and a gaze point path showing a track of movement of a gaze point which is a designation of a gaze of the virtual camera, and a generation unit that generates the free viewpoint video based on the camera path and the gaze point path designated via the user interface, in which the user interface is configured to display a change in a time series of a subject in a time frame which is a target for generating the free viewpoint video in the multi-viewpoint video on a UI screen using a two-dimensional image that captures an imaging scene of the multi-viewpoint video from a bird's-eye view, and to designate the camera path and the gaze point path by the user performing an input operation with respect to the two-dimensional image to draw the track. In addition, in the image processing apparatus described in JP2018-046448A, the two-dimensional image is a still image, and the user interface is configured to display a change in a time series of the subject by superimposing and displaying each subject in a predetermined frame obtained by sampling time frames at regular intervals on the still image in different aspects in a time axis direction. In addition, in the image processing apparatus described in JP2018-046448A, the user interface is configured such that a thumbnail image in a case of being seen from the virtual camera is disposed at regular intervals in the time axis direction along the camera path designated by the user, and a route, altitude, a movement speed of the virtual camera are adjusted via the input operation of the user with respect to the thumbnail image.

JP2017-212592A discloses a control apparatus for a system that generates a virtual viewpoint image by an image generation apparatus based on image data based on imaging by using a plurality of cameras for imaging a subject from a plurality of directions, the control apparatus including a reception unit that receives an indication by a user for designating a viewpoint related to the generation of the virtual viewpoint image, an acquisition unit that acquires information for specifying a limitation region in which the designation of the viewpoint based on the indication received by the reception unit is limited, and which is changed according to at least any one of an operating state of the apparatus provided in the system or a parameter related to the image data, and a display control unit that displays an image based on display control according to the limitation region on a display unit based on the information acquired by the acquisition unit.

JP2014-126906A describes that, in free viewpoint playback processing, before playback of a moving image is started, a display control unit of any one of imaging apparatuses selected by a user may display a list of thumbnail images corresponding to the moving image captured by a plurality of imaging apparatuses, and the playback may be started from the thumbnail image selected by the user among the list of thumbnail images.

### SUMMARY OF THE INVENTION

One embodiment according to the technology of the present disclosure provides an image processing apparatus, an image processing method, and a program which can show a representative image corresponding to a virtual viewpoint moving image to a viewer.

A first aspect according to the technology of the present disclosure relates to an image processing apparatus comprising a processor, and a memory connected to or built in the processor, in which the processor acquires a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and outputs data for displaying the representative image on a display in a size different from the virtual viewpoint moving image.

A second aspect according to the technology of the present disclosure relates to the image processing apparatus according to the first aspect, in which the representative image is an image related to a first frame among a plurality of frames including a first subject in the imaging region in the virtual viewpoint moving image.

A third aspect according to the technology of the present disclosure relates to the image processing apparatus according to the second aspect, in which the first subject is a subject decided based on a time included in the virtual viewpoint moving image.

A fourth aspect according to the technology of the present disclosure relates to the image processing apparatus according to the second or third aspect, in which the first frame is a frame decided based on a size of the first subject in the virtual viewpoint moving image.

A fifth aspect according to the technology of the present disclosure relates to the image processing apparatus according to any one of the first to fourth aspects, in which the processor acquires the representative image based on an edition result of the plurality of pieces of viewpoint information.

A sixth aspect according to the technology of the present disclosure relates to the image processing apparatus according to the fifth aspect, in which the plurality of pieces of viewpoint information include a plurality of viewpoint paths, and the edition result includes a result of edition performed with respect to the plurality of viewpoint paths.

A seventh aspect according to the technology of the present disclosure relates to the image processing apparatus according to any one of the first to sixth aspects, in which the processor acquires the representative image based on a difference degree among the plurality of pieces of viewpoint information.

An eighth aspect according to the technology of the present disclosure relates to the image processing apparatus according to the seventh aspect, in which the plurality of pieces of viewpoint information include a plurality of viewpoint paths, and the difference degree is a difference degree among the plurality of viewpoint paths.

A ninth aspect according to the technology of the present disclosure relates to the image processing apparatus according to any one of the first to eighth aspects, in which the plurality of pieces of viewpoint information include a plurality of viewpoint paths, and the processor acquires the representative image based on a positional relationship among the plurality of viewpoint paths.

A tenth aspect according to the technology of the present disclosure relates to the image processing apparatus according to the ninth aspect, in which the positional relationship is a positional relationship among the plurality of viewpoint paths with respect to a second subject in the imaging region.

An eleventh aspect according to the technology of the present disclosure relates to the image processing apparatus according to any one of the first to tenth aspects, in which the processor searches a plurality of the virtual viewpoint moving images for a search condition conformation virtual viewpoint moving image that conforms to a given search condition, and acquires the representative image based on the search condition conformation virtual viewpoint moving image.

A twelfth aspect according to the technology of the present disclosure relates to the image processing apparatus according to any one of the first to eleventh aspects, in which the representative image is an image decided according to a state of a third subject in the imaging region.

A thirteenth aspect according to the technology of the present disclosure relates to the image processing apparatus according to any one of the first to twelfth aspects, in which the representative image is an image decided according to an attribute of a person involved in the virtual viewpoint moving image.

A fourteenth aspect according to the technology of the present disclosure relates to the image processing apparatus according to any one of the first to thirteenth aspects, in which the representative image is an image showing a content of the virtual viewpoint moving image.

A fifteenth aspect according to the technology of the present disclosure relates to the image processing apparatus according to any one of the first to fourteenth aspects, in which the plurality of pieces of viewpoint information include first viewpoint information and second viewpoint information which have different viewpoints, and the first viewpoint information and the second viewpoint information include information related to different time points.

A sixteenth aspect according to the technology of the present disclosure relates to the image processing apparatus according to any one of the first to fifteenth aspects, in which the processor outputs first data for displaying the representative image on a first display, and outputs second data for displaying the virtual viewpoint moving image corresponding to the representative image on at least one of the first display or a second display according to selection of the representative image displayed on the first display.

A seventeenth aspect according to the technology of the present disclosure relates to the image processing apparatus according to any one of the first to sixteenth aspects, in which the processor stores the representative image and the virtual viewpoint moving image in a state of being associated with each other in the memory.

An eighteenth aspect according to the technology of the present disclosure relates to an image processing apparatus comprising a processor, and a memory connected to or built in the processor, in which the processor acquires a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and outputs data for displaying the representative image on a screen on which a plurality of images are displayed.

A nineteenth aspect according to the technology of the present disclosure relates to an image processing method comprising acquiring a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and outputting data for displaying the representative image on a display in a size different from the virtual viewpoint moving image.

A twentieth aspect according to the technology of the present disclosure relates to a program for causing a computer to execute a process comprising acquiring a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and outputting data for displaying the representative image on a display in a size different from the virtual viewpoint moving image.

### BRIEF DESCRIPTION OF THE DRAWINGS

Fig. 1 is a conceptual diagram showing an example of a configuration of an image processing system.
Fig. 2 is a block diagram showing an example of a hardware configuration of an electric system of a user device.
Fig. 3 is a block diagram showing an example of a function of a main unit of a CPU of an image processing apparatus.
Fig. 4 is a conceptual diagram showing an example of processing contents of a reception screen generation unit, and an example of display contents of a display of the user device.
Fig. 5 is a screen view showing an example of a display aspect of a reception screen in a case in which an operation mode of the user device is a viewpoint setting mode.
Fig. 6 is a screen view showing an example of a display aspect of the reception screen in a case in which the operation mode of the user device is a gaze point setting mode.
Fig. 7 is a block diagram showing an example of contents of viewpoint information and an example of an aspect in which the viewpoint information is transmitted from the user device to the image processing apparatus.
Fig. 8 is a conceptual diagram showing an example of processing contents of a virtual viewpoint moving image generation unit.
Fig. 9 is a conceptual diagram showing an example of processing contents of an acquisition unit, an extraction unit, a selection unit, and a processing unit.
Fig. 10 is a conceptual diagram showing an example of processing contents of the processing unit and a list screen generation unit.
Fig. 11 is a flowchart showing an example of a flow of screen generation processing.
Fig. 12 is a block diagram showing an example of the function of the main unit of the CPU of the image processing apparatus.
Fig. 13 is a conceptual diagram showing an example of an aspect in which a viewpoint path is edited.
Fig. 14 is a block diagram showing an example of the contents of the viewpoint information and an example of the aspect in which the viewpoint information is transmitted from the user device to the image processing apparatus.
Fig. 15 is a conceptual diagram showing an example of the processing contents of the virtual viewpoint moving image generation unit.
Fig. 16 is a conceptual diagram showing an example of processing contents of an edition result processing unit.
Fig. 17 is a conceptual diagram showing an example of the processing contents of the acquisition unit, the extraction unit, the selection unit, and the processing unit.
Fig. 18 is a conceptual diagram showing an example of the processing contents of the processing unit and the list screen generation unit.
Fig. 19 is a block diagram showing an example of the function of the main unit of the CPU of the image processing apparatus.
Fig. 20 is a conceptual diagram showing an example of an aspect in which a first viewpoint path and a second viewpoint path are designated by a user.
Fig. 21 is a conceptual diagram showing an example of contents of first viewpoint path information and contents of second viewpoint path information.
Fig. 22 is a block diagram showing an example of an aspect in which the first viewpoint path information and the second viewpoint path information are transmitted from the user device to the image processing apparatus.
Fig. 23 is a conceptual diagram showing an example of the processing contents of the virtual viewpoint moving image generation unit.
Fig. 24 is a conceptual diagram showing an example of an aspect in which a first virtual viewpoint moving image and a second virtual viewpoint moving image are stored in a storage.
Fig. 25 is a conceptual diagram showing an example of processing contents of a difference degree calculation unit.
Fig. 26 is a conceptual diagram showing an example of an aspect in which the first virtual viewpoint moving image is processed by the acquisition unit, the extraction unit, the selection unit, and the processing unit.
Fig. 27 is a conceptual diagram showing an example of an aspect in which the second virtual viewpoint moving image is processed by the acquisition unit, the extraction unit, the selection unit, and the processing unit.
Fig. 28 is a block diagram showing an example of the function of the main unit of the CPU of the image processing apparatus.
Fig. 29 is a block diagram showing an example of the aspect in which the first viewpoint path information and the second viewpoint path information are transmitted from the user device to the image processing apparatus.
Fig. 30 is a conceptual diagram showing an example of processing contents of a subject position specifying unit.
Fig. 31 is a conceptual diagram showing an example of processing contents of a viewpoint position specifying unit.
Fig. 32 is a conceptual diagram showing an example of an aspect in which the first virtual viewpoint moving image is processed by the acquisition unit and the processing unit.
Fig. 33 is a conceptual diagram showing an example of an aspect in which the second virtual viewpoint moving image is processed by the acquisition unit and the processing unit.
Fig. 34 is a block diagram showing an example of the function of the main unit of the CPU of the image processing apparatus.
Fig. 35 is a conceptual diagram showing an example of processing contents of a search condition giving unit and the acquisition unit.
Fig. 36 is a block diagram showing an example of the function of the main unit of the CPU of the image processing apparatus.
Fig. 37 is a conceptual diagram showing an example of processing contents of a state recognition unit and the acquisition unit.
Fig. 38 is a block diagram showing an example of the function of the main unit of the CPU of the image processing apparatus.
Fig. 39 is a conceptual diagram showing an example of processing contents of a person attribute subject recognition unit and the acquisition unit.
Fig. 40 is a conceptual diagram showing an example of the contents of the first viewpoint path information and the contents of the second viewpoint path information.
Fig. 41 is a conceptual diagram showing an example of an aspect in which a screen generation processing program stored in a storage medium is installed in a computer of the image processing apparatus.

### DESCRIPTION OF THE PREFERRED EMBODIMENTS

An example of an embodiment of an image processing apparatus, an image processing method, and a program according to the technology of the present disclosure will be described with reference to the accompanying drawings.

First, the terms used in the description below will be described.

CPU refers to an abbreviation of "central processing unit". GPU refers to an abbreviation of "graphics processing unit". TPU refers to an abbreviation of "tensor processing unit". RAM refers to an abbreviation of "random access memory". SSD refers to an abbreviation of "solid state drive". HDD refers to an abbreviation of "hard disk drive". EEPROM refers to an abbreviation of "electrically erasable and programmable read only memory". I/F refers to an abbreviation of "interface". ASIC refers to an abbreviation of "application specific integrated circuit". PLD refers to an abbreviation of "programmable logic device". FPGA refers to an abbreviation of "field-programmable gate array". SoC refers to an abbreviation of "system-on-a-chip". CMOS refers to an abbreviation of "complementary metal oxide semiconductor". CCD refers to an abbreviation of "charge coupled device". EL refers to an abbreviation of "electro-luminescence". LAN refers to an abbreviation of "local area network". USB refers to an abbreviation of "universal serial bus". "HMD" refers to an abbreviation of "head mounted display". LTE refers to an abbreviation of "long term evolution". 5G refers to an abbreviation of "5th generation (wireless technology for digital cellular networks)". TDM refers to an abbreviation of "time-division multiplexing". AI refers to an abbreviation of "artificial intelligence". In addition, in the present specification, a subject included in an image (image in a sense including a still image and a moving image) refers to a subject included as a picture (for example, an electronic picture) in the image.

### [First Embodiment]

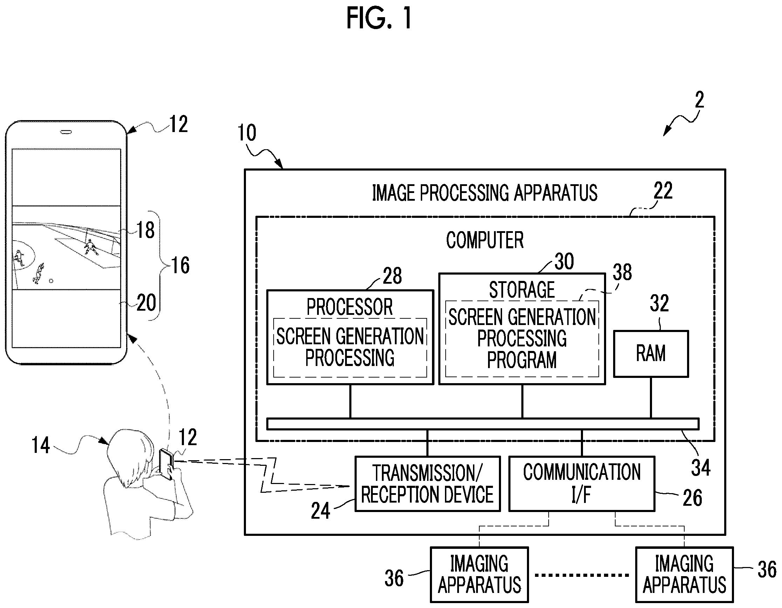

As an example, as shown in Fig. 1, an image processing system 2 comprises an image processing apparatus 10 and a user device 12.

In the first embodiment, a server is applied as an example of the image processing apparatus 10. The server is realized by a main frame, for example. It should be noted that this is merely an example, and for example, the server may be realized by network computing, such as cloud computing, fog computing, edge computing, or grid computing. In addition, the image processing apparatus 10 may be a plurality of servers, may be a workstation, may be a personal computer, may be an apparatus in which at least one workstation and at least one personal computer are combined, may be an apparatus in which at least one workstation, at least one personal computer, and at least one server are combined, or the like.

Moreover, in the first embodiment, a smartphone is applied as an example of the user device 12. It should be noted that the smartphone is merely an example, and for example, a personal computer may be applied, or a portable multifunctional terminal, such as a tablet terminal or an HMD, may be applied.

In addition, in the first embodiment, the image processing apparatus 10 and the user device 12 are connected in a communicable manner via, for example, a base station (not shown). The communication standards used in the base station include a wireless communication standard including a 5G standard and/or an LTE standard, a wireless communication standard including a WiFi (802.11) standard and/or a Bluetooth (registered trademark) standard, and a wired communication standard including a TDM standard and/or an Ethernet (registered trademark) standard.

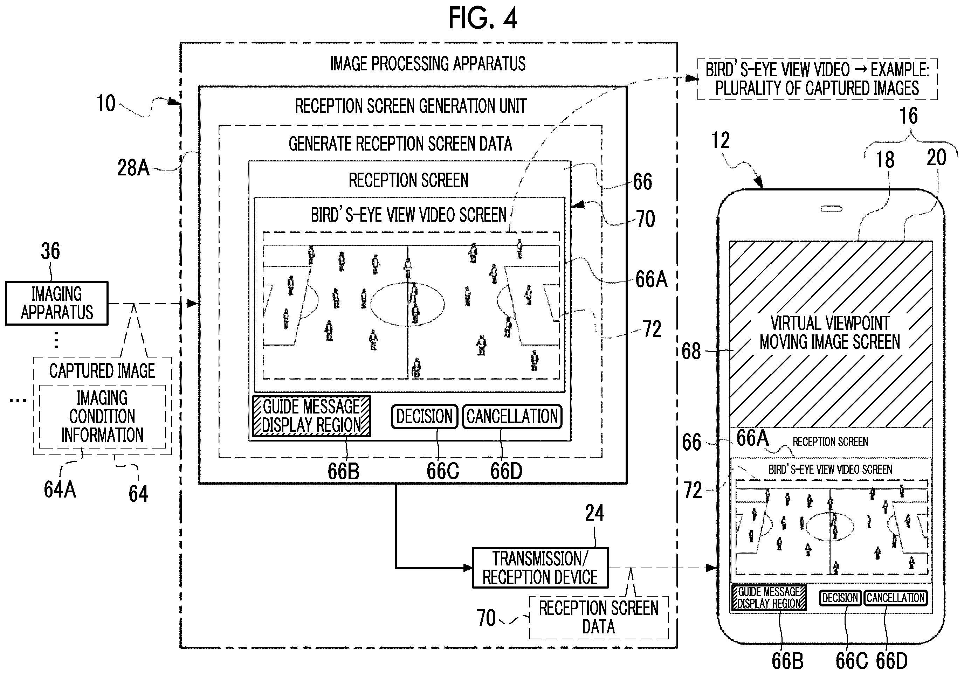

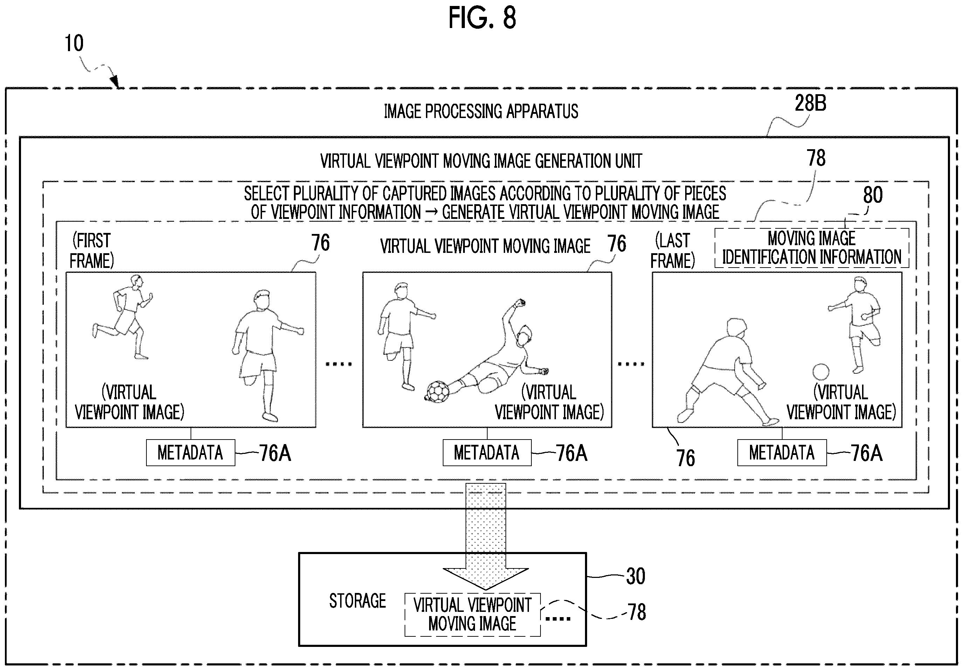

The image processing apparatus 10 acquires an image, and transmits the acquired image to the user device 12. Here, the image refers to, for example, a captured image 64 (see Fig. 4) obtained by being captured and an image generated based on the captured image 64 (see Fig. 4 and the like). Examples of the image generated based on the captured image (see Fig. 4) include a virtual viewpoint image 76 (see Fig. 8 and the like).

The user device 12 is used by a user 14. The user device 12 comprises a touch panel display 16. The touch panel display 16 is realized by a display 18 and a touch panel 20. Examples of the display 18 include an EL display (for example, an organic EL display or an inorganic EL display). It should be noted that the display is not limited to the EL display, and another type of display, such as a liquid crystal display, may be applied.

The touch panel display 16 is formed by superimposing the touch panel 20 on a display region of the display 18 or by forming an in-cell type in which a touch panel function is built in the display 18. It should be noted that the in-cell type is merely an example, and an out-cell type or an on-cell type may be applied.

The user device 12 executes processing according to an instruction received from the user by the touch panel 20 and the like. For example, the user device 12 exchanges various types of information with the image processing apparatus 10 in response to the instruction received from the user by the touch panel 20 and the like.

The user device 12 receives the image transmitted from the image processing apparatus 10, and displays the received image on the display 18. The user 14 views the image displayed on the display 18.

The image processing apparatus 10 comprises a computer 22, a transmission/reception device 24, and a communication I/F 26. The computer 22 is an example of a "computer" according to the technology of the present disclosure, and comprises a processor 28, a storage 30, and a RAM 32. The image processing apparatus 10 comprises a bus 34, and the processor 28, the storage 30, and the RAM 32 are connected via the bus 34. In the example shown in Fig. 1, one bus is shown as the bus 34 for convenience of illustration, but a plurality of buses may be used. In addition, the bus 34 may include a serial bus, or a parallel bus configured by a data bus, an address bus, a control bus, and the like.

The processor 28 is an example of a "processor" according to the technology of the present disclosure. The processor 28 controls the entire image processing apparatus 10. For example, the processor 28 includes a CPU and a GPU, and the GPU is operated under the control of the CPU, and is responsible for executing image processing.

Various parameters, various programs, and the like are stored in the storage 30. Examples of the storage 30 include an EEPROM, an SSD, and/or an HDD. The storage 30 is an example of a "memory" according to the technology of the present disclosure. Various types of information are transitorily stored in the RAM 32. The RAM 32 is used as a work memory by the processor 28.

The transmission/reception device 24 is connected to the bus 34. The transmission/reception device 24 is a device including a communication processor (not shown), an antenna, and the like, and transmits and receives various types of information to and from the user device 12 via the base station (not shown) under the control of the processor 28. That is, the processor 28 exchanges various types of information with the user device 12 via the transmission/reception device 24.

The communication I/F 26 is realized by a device including an FPGA, for example. The communication I/F 26 is connected to a plurality of imaging apparatuses 36 via a LAN cable (not shown). The imaging apparatus 36 is an imaging device including a CMOS image sensor, and has an optical zoom function and/or a digital zoom function. It should be noted that, instead of the CMOS image sensor, another type of image sensor, such as a CCD image sensor, may be adopted.

The plurality of imaging apparatuses 36 are installed, for example, in a soccer stadium (not shown) and image a subject inside the soccer stadium. The captured image 64 (see Fig. 4) obtained by imaging the subject by the imaging apparatus 36 is used, for example, for the generation of the virtual viewpoint image 76 (see Fig. 8 and the like). Therefore, the plurality of imaging apparatuses 36 are installed at different locations inside the soccer stadium, respectively, that is, at locations at which a plurality of captured images 64 (see Fig. 4) for generating virtual viewpoint images 76 (see Fig. 8 and the like) are obtained. Here, the plurality of captured images 64 are examples of a "plurality of captured images" according to the technology of the present disclosure. In addition, the soccer stadium is an example of an "imaging region" according to the technology of the present disclosure.

The soccer stadium is a three-dimensional region including a soccer field and a spectator seat that is constructed to surround the soccer field, and is an observation target of the user 14. An observer, that is, the user 14, can observe the inside of the soccer stadium from the spectator seat or a place outside the soccer stadium through the image displayed by the display 18 of the user device 12.

It should be noted that, here, as an example, the soccer stadium is described as an example as the place in which the plurality of imaging apparatuses 36 are installed, but the technology of the present disclosure is not limited to this. The place in which the plurality of imaging apparatuses 36 are installed may be any place as long as the place is a place in which the plurality of imaging apparatuses 36 can be installed, such as a baseball field, a rugby field, a curling field, an athletic field, a swimming pool, a concert hall, an outdoor music field, and a theater.

The communication I/F 26 is connected to the bus 34, and controls the exchange of various types of information between the processor 28 and the plurality of imaging apparatuses 36. For example, the communication I/F 26 controls the plurality of imaging apparatuses 36 in response to a request from the processor 28. The communication I/F 26 outputs the captured image 64 (see Fig. 4) obtained by being captured by each of the plurality of imaging apparatuses 36 to the processor 28. It should be noted that, here, although the communication I/F 26 is described as a wired communication I/F, a wireless communication I/F, such as a highspeed wireless LAN, may be applied.

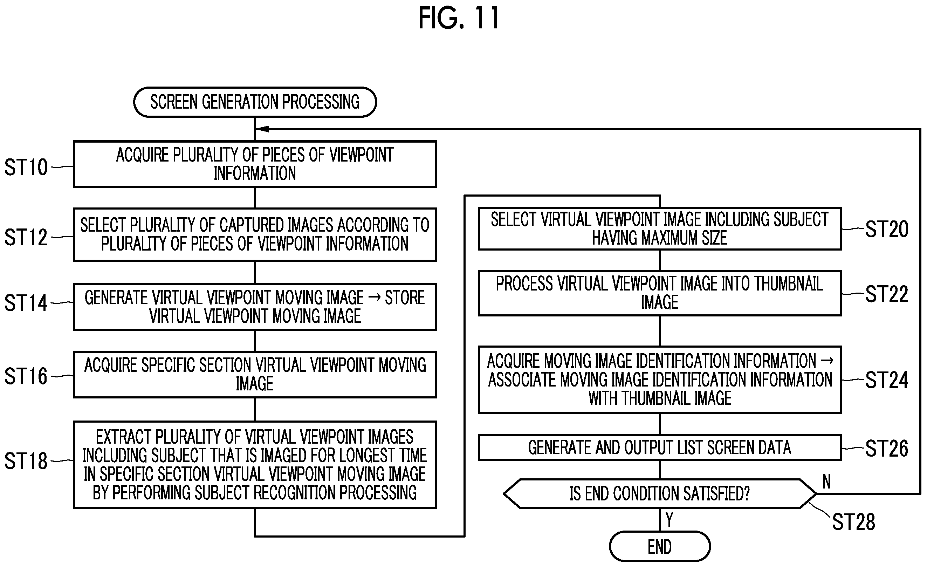

The storage 30 stores a screen generation processing program 38. The screen generation processing program 38 is an example of a "program" according to the technology of the present disclosure. The processor 28 performs screen generation processing (see Fig. 11) by reading out the screen generation processing program 38 from the storage 30 and executing the screen generation processing program 38 on the RAM 32.

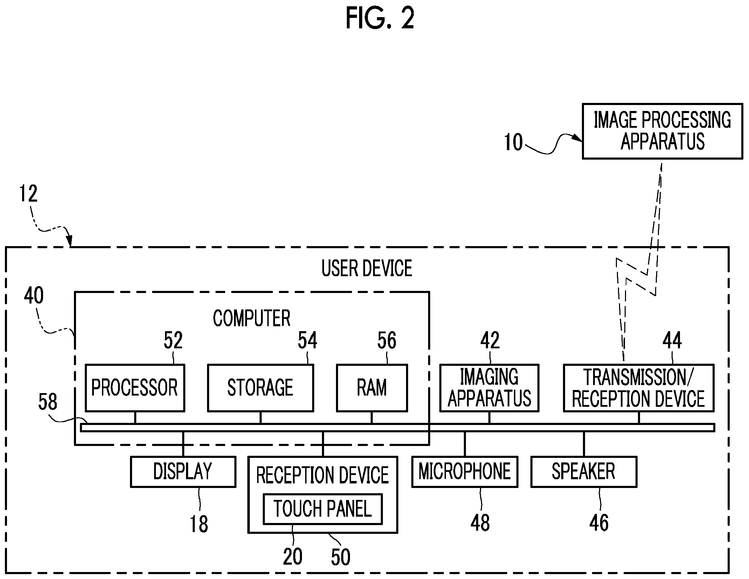

As shown in Fig. 2 as an example, the user device 12 comprises the display 18, a computer 40, an imaging apparatus 42, a transmission/reception device 44, a speaker 46, a microphone 48, and a reception device 50. The computer 40 comprises a processor 52, a storage 54, and a RAM 56. The user device 12 comprises a bus 58, and the processor 52, the storage 54, and the RAM 56 are connected via the bus 58.

In the example shown in Fig. 2, one bus is shown as the bus 58 for convenience of illustration, but a plurality of buses may be used. In addition, the bus 58 may include a serial bus or a parallel bus configured by a data bus, an address bus, a control bus, and the like.

The processor 52 controls the entire user device 12. The processor 52 includes, for example, a CPU and a GPU, and the GPU is operated under the control of the CPU, and is responsible for executing image processing.

Various parameters, various programs, and the like are stored in the storage 54. Examples of the storage 54 include an EEPROM. Various types of information are transitorily stored in the RAM 56. The RAM 56 is used as a work memory by the processor 52. The processor 52 performs processing according to the various programs by reading out various programs from the storage 54 and executing the various programs on the RAM 56.

The imaging apparatus 42 is an imaging device including a CMOS image sensor, and has an optical zoom function and/or a digital zoom function. It should be noted that, instead of the CMOS image sensor, another type of image sensor, such as a CCD image sensor, may be adopted. The imaging apparatus 42 is connected to the bus 58, and the processor 52 controls the imaging apparatus 42. The captured image obtained by the imaging with the imaging apparatus 42 is acquired by the processor 52 via the bus 58.

The transmission/reception device 44 is connected to the bus 58. The transmission/reception device 44 is a device including a communication processor (not shown), an antenna, and the like, and transmits and receives various types of information to and from the image processing apparatus 10 via the base station (not shown) under the control of the processor 52. That is, the processor 52 exchanges various types of information with the image processing apparatus 10 via the transmission/reception device 44.

The speaker 46 converts an electric signal into the sound. The speaker 46 is connected to the bus 58. The speaker 46 receives the electric signal output from the processor 52 via the bus 58, converts the received electric signal into the sound, and outputs the sound obtained by the conversion from the electric signal to the outside of the user device 12.

The microphone 48 converts the collected sound into the electric signal. The microphone 48 is connected to the bus 58. The processor 52 acquires the electric signal obtained by the conversion from the sound collected by the microphone 48 via the bus 58.

The reception device 50 receives an indication from the user 14 or the like. Examples of the reception device 50 include the touch panel 20 and a hard key (not shown). The reception device 50 is connected to the bus 58, and the indication received by the reception device 50 is acquired by the processor 52.

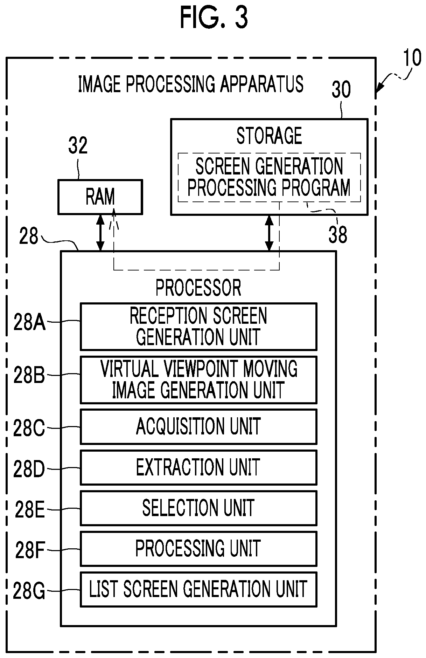

As an example, as shown in Fig. 3, in the image processing apparatus 10, by reading out the screen generation processing program 38 from the storage 30 and executing the screen generation processing program 38 on the RAM 22C, the processor 28 is operated as a reception screen generation unit 28A, a virtual viewpoint moving image generation unit 28B, an acquisition unit 28C, an extraction unit 28D, a selection unit 28E, a processing unit 28F, and a list screen generation unit 28G. Hereinafter, an example of processing contents by the reception screen generation unit 28A, the virtual viewpoint moving image generation unit 28B, the acquisition unit 28C, the extraction unit 28D, the selection unit 28E, the processing unit 28F, and the list screen generation unit 28G will be described.

As an example, as shown in Fig. 4, a reception screen 66 and a virtual viewpoint moving image screen 68 are displayed on the touch panel display 16 of the user device 12. In the example shown in Fig. 4, on the touch panel display 16, the reception screen 66 and the virtual viewpoint moving image screen 68 are displayed in an arranged manner. It should be noted that this is merely an example, and the reception screen 66 and the virtual viewpoint moving image screen 68 may be switched and displayed in response to the indication given to the touch panel display 16 by the user 14, or the reception screen 66 and the virtual viewpoint moving image screen 68 may be individually displayed by different display devices.

In addition, in the example shown in Fig. 4, the reception screen 66 is displayed on the touch panel display 16 of the user device 12, but the technology of the present disclosure is not limited to this, and for example, the reception screen 66 may be displayed on a display connected to a device (for example, a workstation and/or a personal computer) used by a person who creates or edits a virtual viewpoint moving image 78 (see Fig. 8).

The user device 12 acquires the virtual viewpoint moving image 78 (see Fig. 8) from the image processing apparatus 10 by performing communication with the image processing apparatus 10. The virtual viewpoint moving image 78 (see Fig. 8) acquired from the image processing apparatus 10 by the user device 12 is displayed on the virtual viewpoint moving image screen 68 of the touch panel display 16. In the example shown in Fig. 4, the virtual viewpoint moving image 78 is not displayed on the virtual viewpoint moving image screen 68.

The user device 12 performs communication with the image processing apparatus 10 to acquire reception screen data 70 indicating the reception screen 66 from the image processing apparatus 10. The reception screen 66 indicated by the reception screen data 70 acquired from the image processing apparatus 10 by the user device 12 is displayed on the touch panel display 16.

The reception screen 66 includes a bird's-eye view video screen 66A, a guide message display region 66B, a decision key 66C, and a cancellation key 66D, and various types of information required for the generation of the virtual viewpoint moving image 78 (see Fig. 8) is displayed on the reception screen 66. The user 14 gives an indication to the user device 12 with reference to the reception screen 66. The indication from the user 14 is received by the touch panel display 16, for example.

A bird's-eye view video 72 is displayed on the bird's-eye view video screen 66A. The bird's-eye view video 72 is a moving image showing an aspect in a case in which the inside of the soccer stadium is observed from a bird's-eye view, and is generated based on the plurality of captured images 64 obtained by being captured by at least one of the plurality of imaging apparatuses 36. Examples of the bird's-eye view video 72 include a recorded video and/or a live coverage video.

Various messages indicating contents of an operation requested to the user 14 are displayed in the guide message display region 66B. The operation requested to the user 14 refers to, for example, an operation required for the generation of the virtual viewpoint moving image 78 (see Fig. 8) (for example, an operation of setting the viewpoint, an operation of setting the gaze point, and the like).

Display contents of the guide message display region 66B is switched according to an operation mode of the user device 12. For example, the user device 12 has, as the operation mode, a viewpoint setting mode in which the viewpoint is set and a gaze point setting mode in which the gaze point is set, and the display contents of the guide message display region 66B are different between the viewpoint setting mode and the gaze point setting mode.

Both the decision key 66C and the cancellation key 66D are soft keys. The decision key 66C is turned on by the user 14 in a case in which the indication received by the reception screen 66 is decided. The cancellation key 66D is turned on by the user 14 in a case in which the indication received by the reception screen 66 is cancelled.

The reception screen generation unit 28A acquires the plurality of captured images 64 from the plurality of imaging apparatuses 36. The captured image 64 includes imaging condition information 64A. The imaging condition information 64A refers to information indicating an imaging condition. Examples of the imaging condition include three-dimensional coordinates for specifying the installation position of the imaging apparatus 36, an imaging direction by the imaging apparatus 36, an angle of view used in the imaging by the imaging apparatus 36, and a zoom magnification applied to the imaging apparatus 36.

The reception screen generation unit 28A generates the bird's-eye view video 72 based on the plurality of captured images 64 acquired from the plurality of imaging apparatuses 36. Then, the reception screen generation unit 28A generates data indicating the reception screen 66 including the bird's-eye view video 72, as the reception screen data 70.

The reception screen generation unit 28A outputs the reception screen data 70 to the transmission/reception device 24. The transmission/reception device 24 transmits the reception screen data 70 input from the reception screen generation unit 28A to the user device 12. The user device 12 receives the reception screen data 70 transmitted from the transmission/reception device 24 by the transmission/reception device 44 (see Fig. 2). The reception screen 66 indicated by the reception screen data 70 received by the transmission/reception device 44 is displayed on the touch panel display 16.

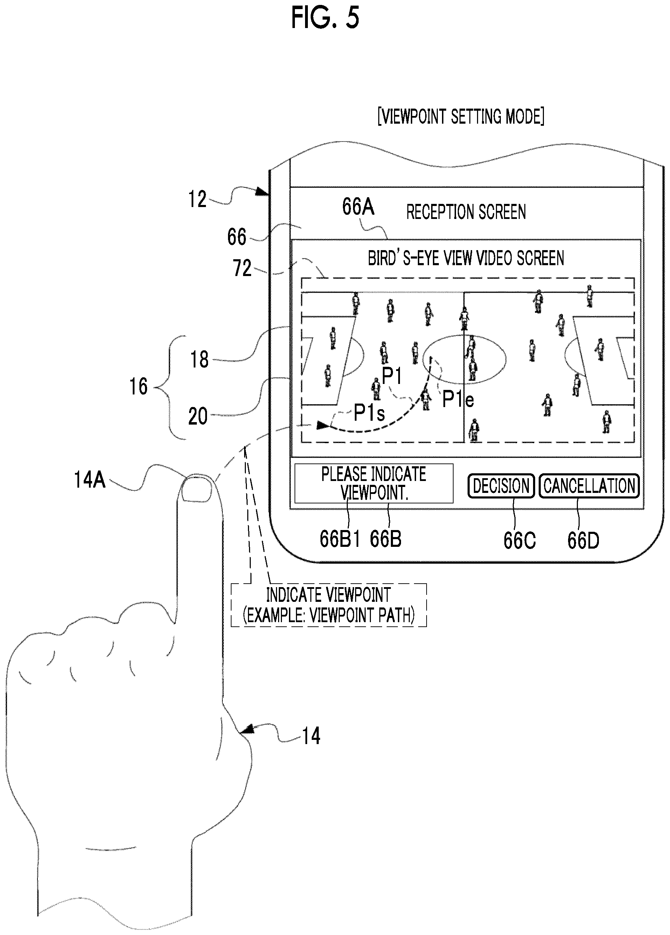

As shown in Fig. 5 as an example, in a case in which the operation mode of the user device 12 is the viewpoint setting mode, a message 66B1 is displayed in the guide message display region 66B of the reception screen 66. The message 66B1 is a message prompting the user 14 to indicate the viewpoint used for the generation of the virtual viewpoint moving image 78 (see Fig. 8). Here, the viewpoint refers to a virtual viewpoint for observing the inside of the soccer stadium. For example, the virtual viewpoint does not refer to a position at which an actually existing camera, such as a physical camera that images the subject (for example, the imaging apparatus 36), is installed, but refers to a position at which a virtual camera that images the subject is installed.

The touch panel display 16 receives an indication from the user 14 in a state in which the message 66B1 is displayed in the guide message display region 66B. In this case, the indication from the user 14 refers to an indication of the viewpoint. The viewpoint corresponds to a position of a pixel in the bird's-eye view video 72. The position of the pixel in the bird's-eye view video 72 corresponds to the position inside the soccer stadium. The indication of the viewpoint is performed by the indication of the position of the pixel in the bird's-eye view video 72 by the user 14 via the touch panel display 16. It should be noted that the viewpoint may have three-dimensional coordinates corresponding to a three-dimensional position in the bird's-eye view video 72. Any method can be used as a method of indicating the three-dimensional position. For example, the user 14 may directly input a three-dimensional coordinate position, or may designate the three-dimensional coordinate position by displaying two images showing the soccer stadium seen from two planes perpendicular to each other and designating each pixel position.

In the example shown in Fig. 5, a viewpoint path P1, which is a path for observing the subject, is shown as an example of the viewpoint. The viewpoint path P1 is an aggregation in which a plurality of viewpoints are linearly arranged from a starting point P1s to an end point P1e. The viewpoint path P1 is defined along a route (in the example shown in Fig. 5, a meandering route from the starting point P1s to the end point P1e) in which the user 14 slides (swipes) his/her fingertip 14A on a region corresponding to a display region of the bird's-eye view video 72 in the entire region of the touch panel 20. In addition, an observation time from the viewpoint path P1 (for example, a time of observation between two different viewpoints and/or a time of observation at a certain point in a stationary state) is defined by a speed of the slide performed with respect to the touch panel display 16 in a case in which the viewpoint path P1 is formed via the touch panel display 16, a time (for example, a long press time) to stay at one viewpoint on the viewpoint path P1, and the like.

In the example shown in Fig. 5, the decision key 66C is turned on in a case in which the viewpoint path P1 is settled, and the cancellation key 66D is turned on in a case in which the viewpoint path P1 is cancelled.

It should be noted that, in the example shown in Fig. 5, only the viewpoint path P1 is set, but this is merely an example, and a plurality of viewpoint paths may be set. In addition, the technology of the present disclosure is not limited to the viewpoint path, and a plurality of discontinuous viewpoints may be used, or one viewpoint may be used.

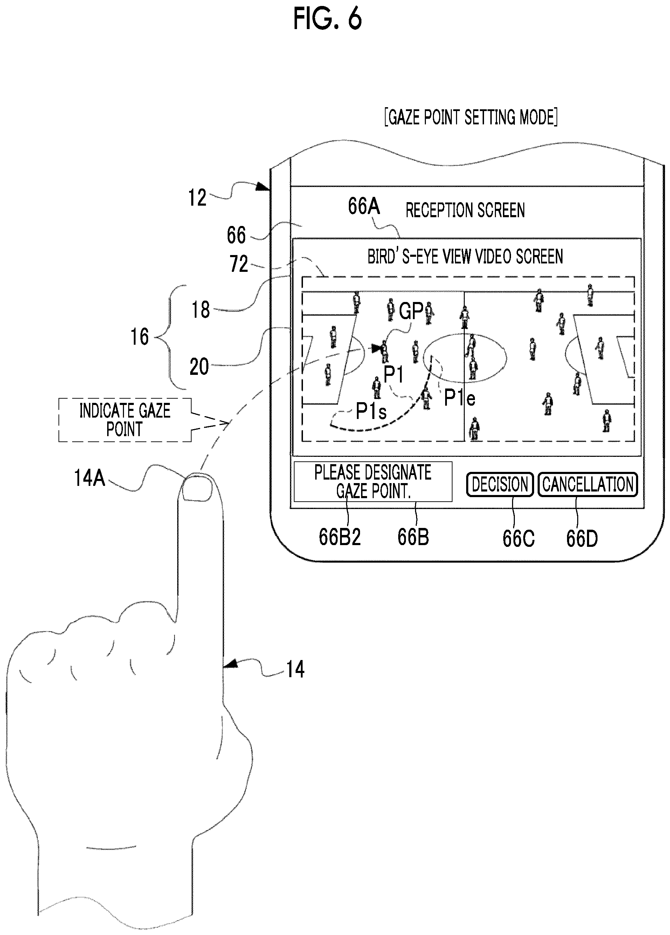

As shown in Fig. 6 as an example, in a case in which the operation mode of the user device 12 is the gaze point setting mode, a message 66B2 is displayed in the guide message display region 66B of the reception screen 66. The message 66B2 is a message prompting the user 14 to indicate the gaze point used for the generation of the virtual viewpoint moving image 78 (see Fig. 8). Here, the gaze point refers to a point that is virtually gazed in a case in which the inside of the soccer stadium is observed from the viewpoint. In a case in which the viewpoint and the gaze point are set, a virtual visual line direction (imaging direction of the virtual camera) is also uniquely decided. The virtual visual line direction refers to a direction from the viewpoint to the gaze point.

The touch panel display 16 receives an indication from the user 14 in a state in which the message 66B2 is displayed in the guide message display region 66B. In this case, the indication from the user 14 refers to an indication of the gaze point. The gaze point corresponds to a position of a pixel in the bird's-eye view video 72. The position of the pixel in the bird's-eye view video 72 corresponds to the position inside the soccer stadium. The indication of the gaze point is performed by the user 14 indicating the position of the pixel in the bird's-eye view video 72 via the touch panel display 16. In the example shown in Fig. 6, a gaze point GP is shown. The gaze point GP is defined according to a location in which the user 14 touches his/her fingertip 14A on the region corresponding to the display region of the bird's-eye view video 72 in the entire region of the touch panel display 16. In the example shown in Fig. 6, the decision key 66C is turned on in a case in which the gaze point GP is settled, and the cancellation key 66D is turned on in a case in which the gaze point GP is cancelled. It should be noted that the gaze point may have three-dimensional coordinates corresponding to a three-dimensional position in the bird's-eye view video 72. Any method can be used as a method of indicating the three-dimensional position, as in the indication of the viewpoint position.

It should be noted that, in the example shown in Fig. 6, only the gaze point GP is designated, but this is merely an example, and a plurality of gaze points may be used, or a path (gaze point path) in which a plurality of gaze points are linearly arranged may be used. One or a plurality of gaze point paths may be used.

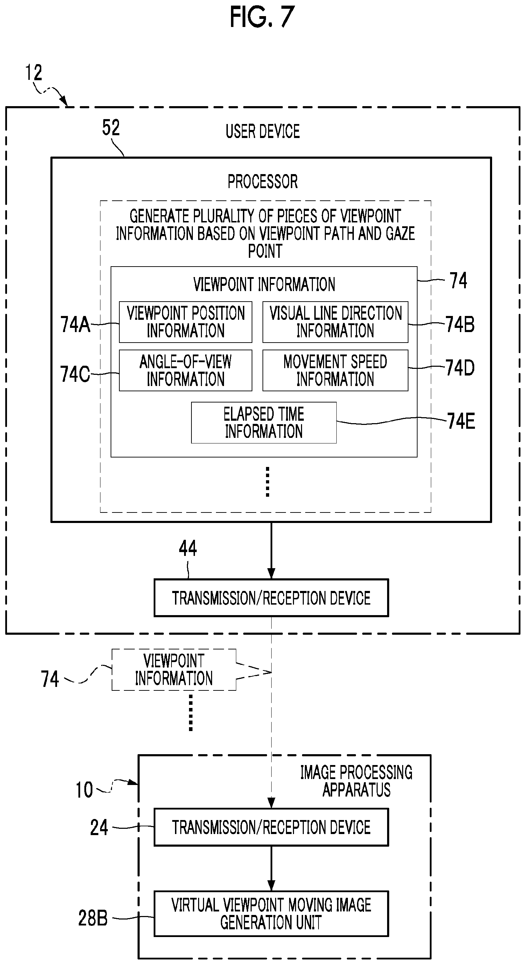

As an example, as shown in Fig. 7, the processor 52 of the user device 12 generates a plurality of pieces of viewpoint information 74 based on the viewpoint path P1 and the gaze point GP. The plurality of pieces of viewpoint information 74 are examples of a "plurality of pieces of viewpoint information" according to the technology of the present disclosure.

The viewpoint information 74 is information used for the generation of the virtual viewpoint moving image 78 (see Fig. 8). The viewpoint information 74 includes viewpoint position information 74A, visual line direction information 74B, angle-of-view information 74C, movement speed information 74D, and elapsed time information 74E.

The viewpoint position information 74A is information for specifying a position of the viewpoint (hereinafter, also referred to as a "viewpoint position"). The viewpoint position refers to, for example, a position of the virtual camera described above. Here, as an example of the viewpoint position, a position of a pixel in the bird's-eye view video 72 of one viewpoint included in the viewpoint path P1 (see Fig. 5) settled in the viewpoint setting mode is applied. Examples of the information for specifying the position of the pixel in the bird's-eye view video 72 of the viewpoint path P1 include coordinates for specifying a position of a pixel of the viewpoint path P1 in the bird's-eye view video 72.

The viewpoint path P1 includes the starting point P1s and the end point P1e (see Fig. 5). Therefore, a plurality of pieces of viewpoint position information 74A indicating all the viewpoints included in the viewpoint path P1 also include starting point positional information (hereinafter, also simply referred to as a "starting point positional information") for specifying a position of the starting point P1s and end point positional information (hereinafter, also simply referred to as an "end point positional information") for specifying a position of the end point P1e. Examples of the starting point positional information include coordinates for specifying a position of a pixel of the starting point P1s in the bird's-eye view video 72. Examples of the end point positional information include coordinates for specifying a position of a pixel of the end point P1e in the bird's-eye view video 72.

The visual line direction information 74B is information for specifying the visual line direction. The visual line direction refers, for example, a direction in which the subject is observed from the viewpoint included in the viewpoint path P1 to the gaze point GP. For example, the visual line direction information 74B is decided for each viewpoint specified from the plurality of pieces of viewpoint position information 74A indicating all the viewpoints included in the viewpoint path P1, and is defined by information for specifying the position of the viewpoint (for example, coordinates for specifying a position of a pixel of the viewpoint in the bird's-eye view video 72) and information for specifying a position of the gaze point GP settled in the gaze point setting mode (for example, coordinates for specifying a position of a pixel of the gaze point GP in the bird's-eye view video 72).

The angle-of-view information 74C is information indicating an angle of view (hereinafter, also simply referred to as an "angle of view"). Here, the angle of view refers to an angle of view for observing the subject on the viewpoint path P1. In the first embodiment, the angle of view is fixed to a predetermined angle (for example, 100 degrees). It should be noted that this is merely an example, and the angle of view may be decided according to the movement speed. Here, the movement speed refers to a speed at which the viewpoint position for observing the subject on the viewpoint path P1 is moved. Examples of the movement speed include a speed of a slide performed with respect to the touch panel display 16 in a case in which the viewpoint path P1 is formed via the touch panel display 16.

In a case in which the angle of view is decided according to the movement speed, for example, within a range in which an upper limit (for example, 150 degrees) and a lower limit (for example, 15 degrees) of the angle of view are decided, the angle of view is narrower as the movement speed is lower. In addition, the angle of view may be narrower as the movement speed is higher.

In addition, the angle of view may be decided according to an elapsed time corresponding to the viewpoint position (hereinafter, also simply referred to as an "elapsed time"). Here, the elapsed time refers to, for example, a time in which the viewpoint is stationary at a certain viewpoint position on the viewpoint path P1.

In a case in which the angle of view is decided according to the elapsed time, for example, the angle of view need only be minimized in a case in which the elapsed time exceeds a first predetermined time (for example, 3 seconds), or the angle of view need only be maximized in a case in which the elapsed time exceeds the first predetermined time.

In addition, the angle of view may be decided according to the indication received by the reception device 50. In this case, the reception device 50 need only receive the indications regarding the viewpoint position at which the angle of view is changed and the changed angle of view on the viewpoint path P1.

The movement speed information 74D is information indicating the movement speed (hereinafter, also simply referred to as the "movement speed") described above, and is associated with each corresponding viewpoint in the viewpoint path P1. The elapsed time information 74E is information indicating the elapsed time.

The processor 52 outputs the plurality of pieces of viewpoint information 74 to the transmission/reception device 44. The transmission/reception device 44 transmits the plurality of pieces of viewpoint information 74 input from the processor 52 to the image processing apparatus 10. The transmission/reception device 24 of the image processing apparatus 10 receives the plurality of pieces of viewpoint information 74 transmitted from the transmission/reception device 44. The virtual viewpoint moving image generation unit 28B of the image processing apparatus 10 acquires the plurality of pieces of viewpoint information 74 received by the transmission/reception device 24.

As shown in Fig. 8 as an example, the virtual viewpoint moving image generation unit 28B selects the plurality of captured images 64 (see Fig. 4) used for the generation of the virtual viewpoint image 76 according to the plurality of pieces of viewpoint information 74 (for example, the plurality of pieces of viewpoint information 74 for specifying the viewpoint path P1 shown in Fig. 5). That is, the virtual viewpoint moving image generation unit 28B selects the plurality of captured images 64 (see Fig. 4) used for the generation of the virtual viewpoint image 76, which is an image showing an aspect of the subject in a case in which the subject is observed according to the plurality of pieces of viewpoint information 74, from among the plurality of captured images 64 obtained by being captured by the plurality of imaging apparatuses 36 (see Figs. 1 and 4).

The virtual viewpoint moving image generation unit 28B generates the virtual viewpoint moving image 78 based on the plurality of pieces of viewpoint information 74 and the plurality of captured images 64. That is, the virtual viewpoint moving image generation unit 28B generates the virtual viewpoint moving image 78, which is a moving image showing an aspect of the subject in a case in which the subject is observed from the viewpoint specified by the plurality of pieces of viewpoint information 74 (for example, the plurality of pieces of viewpoint information 74 for specifying the viewpoint path P1 shown in Fig. 5), based on the plurality of captured images 64 selected according to the plurality of pieces of viewpoint information 74.

For example, the virtual viewpoint moving image generation unit 28B generates the virtual viewpoint images 76 of a plurality of frames according to the viewpoint path P1 (see Fig. 5). That is, the virtual viewpoint moving image generation unit 28B generates the virtual viewpoint image 76 for each viewpoint on the viewpoint path P1. The virtual viewpoint moving image generation unit 28B generates the virtual viewpoint moving image 78 by arranging the virtual viewpoint images 76 of the plurality of frames in a time series. The virtual viewpoint moving image 78 generated in this way is data for being displayed on the touch panel display 16 of the user device 12. A time in which the virtual viewpoint moving image 78 is displayed on the touch panel display 16 is decided according to the plurality of pieces of viewpoint information 74 (for example, the plurality of pieces of viewpoint information 74 indicating the viewpoint path P1 shown in Fig. 1).

The virtual viewpoint moving image generation unit 28B gives metadata 76A to each of the virtual viewpoint images 76 of the plurality of frames included in the virtual viewpoint moving image 78. The metadata 76A is generated by the virtual viewpoint moving image generation unit 28B based on, for example, the imaging condition information 64A (see Fig. 4) included in the captured image 64 used for the generation of the virtual viewpoint image 76. The metadata 76A includes a time point at which the virtual viewpoint image 76 is generated, and information based on the imaging condition information 64A.

The virtual viewpoint moving image generation unit 28B gives moving image identification information 80 to the virtual viewpoint moving image 78 each time the virtual viewpoint moving image 78 is generated. The moving image identification information 80 includes an identifier uniquely assigned to the virtual viewpoint moving image 78, and is used for specifying the virtual viewpoint moving image 78. In addition, the moving image identification information 80 includes metadata, such as a time point at which the virtual viewpoint moving image 78 is generated and/or a total playback time of the virtual viewpoint moving image 78.

The virtual viewpoint moving image generation unit 28B stores the generated virtual viewpoint moving image 78 in the storage 30. The storage 30 stores, for example, the virtual viewpoint moving image 78 generated by the virtual viewpoint moving image generation unit 28B for the plurality of viewpoint paths including the viewpoint path P1.

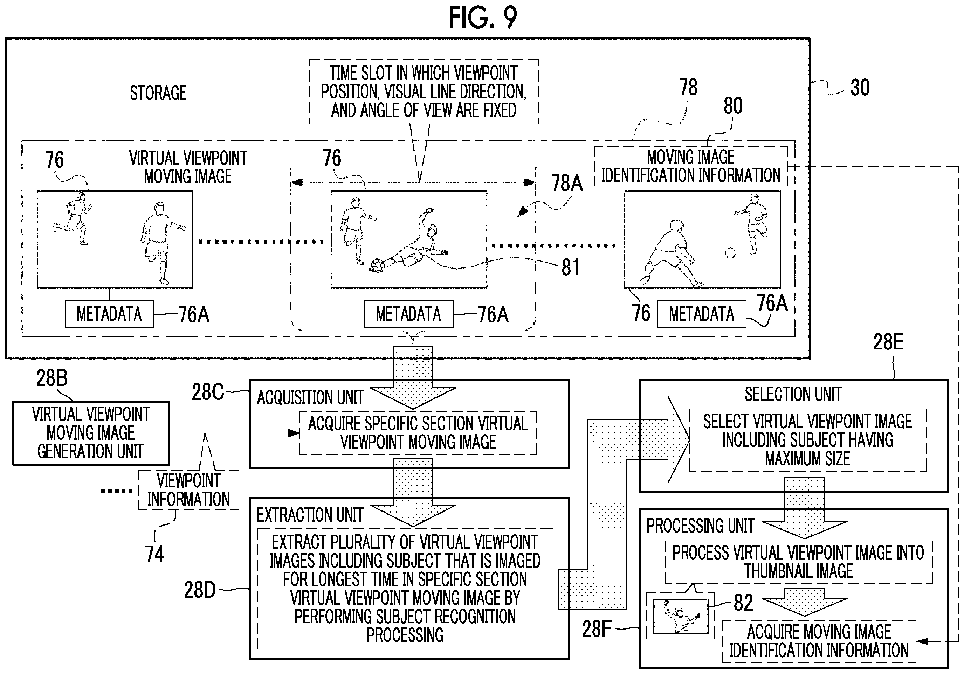

As shown in Fig. 9 as an example, the acquisition unit 28C acquires the plurality of pieces of viewpoint information 74 used for the generation of the virtual viewpoint moving image 78 (in the example shown in Fig. 9, the virtual viewpoint moving image 78 stored in the storage 30) by the virtual viewpoint moving image generation unit 28B from the virtual viewpoint moving image generation unit 28B. The acquisition unit 28C acquires a specific section virtual viewpoint moving image 78A from the virtual viewpoint moving image 78 stored in the storage 30. The specific section virtual viewpoint moving image 78A is a virtual viewpoint moving image in the time slot in which the viewpoint position, the visual line direction, and the angle of view of the virtual viewpoint moving image 78 are fixed (for example, the time slot specified from the viewpoint information 74 related to the viewpoint position having the longest time in which the viewpoint is stationary among a plurality of viewpoint positions included in the viewpoint path P1). That is, the virtual viewpoint moving image in the time slot in which the viewpoint position, the visual line direction, and the angle of view of the virtual viewpoint moving image 78 are fixed refers to, for example, the virtual viewpoint moving image (that is, the virtual viewpoint images of the plurality of frames) generated by the virtual viewpoint moving image generation unit 28B according to the viewpoint information 74 including the elapsed time information 74E indicating the longest elapsed time among the plurality of pieces of viewpoint information 74.

The extraction unit 28D specifies a target subject 81 decided based on the time (in the example shown in Fig. 9, a time slot in which the viewpoint position, the visual line direction, and the angle of view are fixed) included in the virtual viewpoint moving image 78. Here, the target subject 81 is an example of a "first subject" according to the technology of the present disclosure.

A first example of the time included in the virtual viewpoint moving image 78 is a length of a time in which the subject is imaged. In addition, a second example of the time included in the virtual viewpoint moving image 78 is a first and/or last time slot (for example, several seconds) in the total playback time of the virtual viewpoint moving image 78. In addition, a third example of the time included in the virtual viewpoint moving image 78 is a time point.

In the first embodiment, the extraction unit 28D specifies the subject that is imaged for the longest time in the specific section virtual viewpoint moving image 78A as the target subject 81 by performing subject recognition processing of an AI method with respect to all the virtual viewpoint images 76 included in the specific section virtual viewpoint moving image 78A acquired by the acquisition unit 28C. Then, the extraction unit 28D extracts the virtual viewpoint images 76 of the plurality of frames including the specified target subject 81 from the specific section virtual viewpoint moving image 78A.

It should be noted that, here, although the form example is described in which the subject recognition processing of the AI method is performed, this is merely an example, and subject recognition processing of a template matching method may be performed. In addition, an identifier (hereinafter, referred to as a "subject identifier") for specifying the subject is given in advance to the subject included in all the virtual viewpoint images 76 included in the virtual viewpoint moving image 78, the extraction unit 28D may specify the subject included in each virtual viewpoint image 76 with reference to the subject identifier.

The selection unit 28E selects the virtual viewpoint image 76 of one frame decided based on a size of the target subject 81 in the virtual viewpoint images 76 of the plurality of frames extracted by the extraction unit 28D. For example, the selection unit 28E selects the virtual viewpoint image 76 of one frame including the target subject 81 having a maximum size from among the virtual viewpoint images 76 of the plurality of frames extracted by the extraction unit 28D. For example, in a case in which the subject recognition processing of the AI method is performed by the extraction unit 28D, the selection unit 28E specifies the virtual viewpoint image 76 including the target subject 81 having the maximum size by referring to a size of a bounding box used in the subject recognition processing of the AI method.

Here, the plurality of frames extracted by the extraction unit 28D are examples of a "plurality of frames including a first subject in the imaging region in the virtual viewpoint moving image" according to the technology of the present disclosure. In addition, the virtual viewpoint image 76 of one frame including the target subject 81 having the maximum size is an example of an "image related to a first frame" according to the technology of the present disclosure. In addition, the "maximum size" is an example of a "size of the first subject" according to the technology of the present disclosure.

It should be noted that, although the target subject 81 having the maximum size is described as an example here, this is merely an example, and the target subject 81 having a designated size other than the maximum size (for example, the next largest size after the maximum size) may be used, the target subject 81 having the maximum size within a size range decided in advance (for example, a size range decided according to an indication received by the reception device 50 or the like) may be used, or the target subject 81 having a size decided according to an indication received by the reception device 50 or the like may be used.

The processing unit 28F processes the virtual viewpoint moving image 78 into an image having a size different from the size of the virtual viewpoint moving image 78. Examples of the image having the size different from the size of the virtual viewpoint moving image 78 include an image having a smaller amount of data than the virtual viewpoint moving image 78 (for example, an image for at least one frame), an image in which the virtual viewpoint moving image 78 is thinned out (for example, a frame-by-frame image), an image in which a display size of the virtual viewpoint image 76 for at least one frame included in the virtual viewpoint moving image 78 is reduced, and/or an image obtained by thinning out the pixels in the virtual viewpoint image 76 for at least one frame included in the virtual viewpoint moving image 78.

The processing unit 28F generates an image related to the virtual viewpoint image 76 of one frame among all the virtual viewpoint images 76 included in the virtual viewpoint moving image 78. The image related to the virtual viewpoint image 76 of one frame is, for example, an image showing a content of the virtual viewpoint moving image 78. Here, the image related to the virtual viewpoint image 76 of one frame is an example of an "image related to a first frame" according to the technology of the present disclosure. Examples of the image related to the virtual viewpoint image 76 of one frame include the entire virtual viewpoint image 76 of one frame itself, a part cut out from the virtual viewpoint image 76 of one frame, and/or an image in which the virtual viewpoint image 76 of one frame is processed.

The processing unit 28F acquires a thumbnail image 82 corresponding to the virtual viewpoint moving image 78 based on the plurality of captured images 64 and the plurality of pieces of viewpoint information 74. The thumbnail image 82 is an example of a "representative image" according to the technology of the present disclosure. That is, the processing unit 28F converts the virtual viewpoint image 76 of one representative frame among all the virtual viewpoint images 76 included in the virtual viewpoint moving image 78 into a thumbnail. The processing unit 28F processes, for example, the virtual viewpoint image 76 selected by the selection unit 28E into the thumbnail image 82. As the method of processing the virtual viewpoint image 76 into the thumbnail image 82, a method of processing the virtual viewpoint moving image 78 into the image having the size different from the size of the virtual viewpoint moving image 78 can be used. In addition, the processing unit 28F associates the metadata 76A, which is given to the virtual viewpoint image 76 before being converted into the thumbnail, with the thumbnail image 82. In addition, the processing unit 28F acquires the moving image identification information 80 from the virtual viewpoint moving image 78 including the virtual viewpoint image 76 converted into the thumbnail.

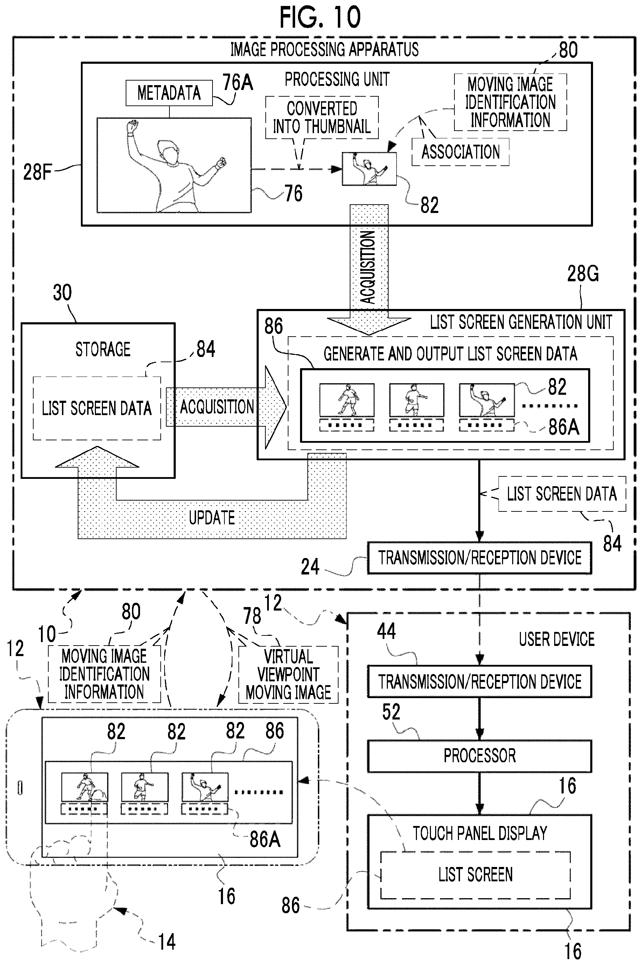

As shown in Fig. 10 as an example, the processing unit 28F associates the moving image identification information 80 with the thumbnail image 82 obtained by converting the virtual viewpoint image 76 into the thumbnail.

The list screen generation unit 28G acquires the thumbnail image 82 with which the metadata 76A and the moving image identification information 80 are associated from the processing unit 28F. The list screen generation unit 28G generates reference information 86A based on the metadata 76A and/or the moving image identification information 80, and associates the reference information 86A with the thumbnail image 82. The list screen generation unit 28G generates list screen data 84 indicating a list screen 86 including the thumbnail image 82 with which the reference information 86A is associated. The list screen data 84 is data for displaying the thumbnail image 82 on the touch panel display 16 of the user device 12. The list screen generation unit 28G outputs the generated list screen data 84 to the transmission/reception device 24, and stores the generated list screen data 84 in the storage 30. As a result, the thumbnail image 82 associated with the moving image identification information 80 is stored in the storage 30. That is, since the moving image identification information 80 is the identifier uniquely assigned to the virtual viewpoint moving image 78, the storage 30 stores the thumbnail image 82 and the virtual viewpoint moving image 78 in a state of being associated with each other.

The list screen data 84 is an example of "data" and "first data" according to the technology of the present disclosure. Also, the touch panel display 16 is an example of a "display" and a "first display" according to the technology of the present disclosure.

Examples of the reference information 86A associated with the thumbnail image 82 by the list screen generation unit 28G include character information. Examples of the character information include character information indicating a time point at which the virtual viewpoint moving image 78 is generated (for example, a time point specified from the imaging condition information 64A shown in Fig. 4), information related to the target subject 81 included in the thumbnail image 82 (for example, a name of the target subject 81 and/or a team to which the target subject 81 belongs), the total playback time of the virtual viewpoint moving image 78, a title of the virtual viewpoint moving image 78, and/or a name of a creator of the virtual viewpoint moving image 78.

In a state in which the list screen data 84 is stored in the storage 30, in a case in which the processing unit 28F generates the thumbnail image 82 and associates the metadata 76A and the moving image identification information 80 with the generated thumbnail image 82, the list screen generation unit 28G acquires the list screen data 84 from the storage 30, and updates the list screen data 84. That is, the list screen generation unit 28G acquires the thumbnail image 82 with which the metadata 76A and the moving image identification information 80 are associated from the processing unit 28F to generate the reference information 86A. The list screen generation unit 28G associates the generated reference information 86A with the thumbnail image 82. Then, the list screen generation unit 28G includes the thumbnail image 82 with which the reference information 86A is associated in the list screen 86 to update the list screen data 84. The list screen generation unit 28G outputs the generated list screen data 84 to the transmission/reception device 24, and stores the updated list screen data 84 in the storage 30.

A plurality of thumbnail images 82 are included in the list screen 86 indicated by the updated list screen data 84. In addition, in the list screen 86 indicated by the updated list screen data 84, the reference information 86A is associated with each of the plurality of thumbnail images 82.

The transmission/reception device 24 transmits the list screen data 84 input from the list screen generation unit 28G to the user device 12. In the user device 12, the transmission/reception device 44 receives the list screen data 84 transmitted from the image processing apparatus 10. The processor 52 acquires the list screen data 84 received by the transmission/reception device 44, and displays the list screen 86 indicated by the acquired list screen data 84 on the touch panel display 16. On the list screen 86, a plurality of images are displayed in parallel. In the example shown in Fig. 10, the plurality of thumbnail images 82 are displayed on the list screen 86 together with the reference information 86A. That is, the reference information 86A is displayed on the list screen 86 in an aspect in which a relevance to the thumbnail image 82 can be visually grasped (for example, an aspect in which the reference information 86A and the thumbnail image 82 are aligned such that it is visually graspable that there is a one-to-one relationship).

It should be noted that, here, although the form example is described in which the plurality of thumbnail images 82 are displayed on the list screen 86, only one thumbnail image 82 may be displayed on the list screen 86. In addition, the plurality of thumbnail images 82 do not always have to be displayed in parallel, and any display may be used as long as an aspect is the aspect in which the plurality of thumbnail images 82 can be visually grasped.

In a state in which the list screen 86 is displayed on the touch panel display 16, the user 14 selects the thumbnail image 82 by tapping any one of the thumbnail images 82 in the list screen 86 via the touch panel display 16. In a case in which the thumbnail image 82 is selected, the processor 28 (see Figs. 1 and 3) of the image processing apparatus 10 outputs data for displaying the virtual viewpoint moving image 78 on the touch panel display 16 on the user device 12.

For example, in a case in which the thumbnail image 82 is selected by the user 14 via the touch panel display 16, the processor 52 of the user device 12 transmits the moving image identification information 80 associated with the selected thumbnail image 82 to the image processing apparatus 10 via the transmission/reception device 44. In the image processing apparatus 10, the moving image identification information 80 is received by the transmission/reception device 24. The processor 28 of the image processing apparatus 10 (see Figs. 1 and 3) acquires the virtual viewpoint moving image 78 corresponding to the moving image identification information 80 received by the transmission/reception device 24 from the storage 30, and transmits the acquired virtual viewpoint moving image 78 to the user device 12 via the transmission/reception device 24. In the user device 12, the virtual viewpoint moving image 78 transmitted from the image processing apparatus 10 is received by the transmission/reception device 44. The processor 52 of the user device 12 displays the virtual viewpoint moving image 78 received by the transmission/reception device 44 on the touch panel display 16. For example, the virtual viewpoint moving image 78 is displayed on the virtual viewpoint moving image screen 68 (see Fig. 4) of the touch panel display 16.

It should be noted that, the form example is described in which the virtual viewpoint moving image 78 is displayed on the touch panel display 16, but this is merely an example, and for example, the virtual viewpoint moving image 78 may be displayed on a display directly or indirectly connected to the image processing apparatus 10 instead of the touch panel display 16 or together with the touch panel display 16. In this case, the display directly or indirectly connected to the image processing apparatus 10 is an example of a "second display" according to the technology of the present disclosure.

In addition, although the form example is described in which the thumbnail image 82 is selected by tapping any one of the thumbnail images 82 in the list screen 86, this is merely an example, and for example, the thumbnail image 82 may be selected by flicking, swiping, and/or long pressing the thumbnail image 82 via the touch panel display 16, the thumbnail image 82 may be selected by performing voice recognition processing with respect to a voice acquired by the microphone 48, or the thumbnail image 82 may be selected by an operation of a mouse and/or a keyboard.

Hereinafter, an operation of the image processing apparatus 10 according to the first embodiment will be described with reference to Fig. 11.

It should be noted that Fig. 11 shows an example of a flow of the screen generation processing performed by the processor 28 of the image processing apparatus 10. The flow of the screen generation processing shown in Fig. 11 is an example of an image processing method according to the technology of the present disclosure.

In the screen generation processing shown in Fig. 11, first, in step ST10, the virtual viewpoint moving image generation unit 28B acquires the plurality of pieces of viewpoint information 74 (for example, the plurality of pieces of viewpoint information 74 corresponding to the viewpoint path P1) from the user device 12 (see Fig. 7). After the processing of step ST10 is executed, the screen generation processing shifts to step ST12.

In step ST12, the virtual viewpoint moving image generation unit 28B selects the plurality of captured images 64 according to the plurality of pieces of viewpoint information 74 acquired in step ST10 (see Fig. 8). After the processing of step ST12 is executed, the screen generation processing shifts to step ST14.

In step ST14, the virtual viewpoint moving image generation unit 28B generates the virtual viewpoint moving image 78 based on the plurality of captured images 64 selected in step ST12, and stores the generated virtual viewpoint moving image 78 in the storage 30 (see Fig. 8). After the processing of step ST14 is executed, the screen generation processing shifts to step ST16.

In step ST16, the acquisition unit 28C acquires, as the specific section virtual viewpoint moving image 78A, the virtual viewpoint moving image in the time slot in which the viewpoint position, the visual line direction, and the angle of view are fixed among the virtual viewpoint moving images 78 from the storage 30 according to the plurality of pieces of viewpoint information 74 used for the generation of the virtual viewpoint moving image 78 by the virtual viewpoint moving image generation unit 28B (see Fig. 9). After the processing of step ST16 is executed, the screen generation processing shifts to step ST18.

In step ST18, the extraction unit 28D extracts a plurality of virtual viewpoint images 76 including the target subject 81 that is imaged for the longest time in the specific section virtual viewpoint moving image 78A as the target subject 81 from the specific section virtual viewpoint moving image 78A by performing the subject recognition processing of the AI method with respect to the specific section virtual viewpoint moving image 78A (see Fig. 9). After the processing of step ST18 is executed, the screen generation processing shifts to step ST20.

In step ST20, the selection unit 28E selects the virtual viewpoint image 76 including the target subject 81 having the maximum size from among the plurality of virtual viewpoint images 76 extracted in step ST18 (see Fig. 9). After the processing of step ST20 is executed, the screen generation processing shifts to step ST22.

In step ST22, the processing unit 28F processes the virtual viewpoint image 76 selected in step ST20 into the thumbnail image 82 (see Figs. 9 and 10). The metadata 76Aof the virtual viewpoint image 76 selected in step ST20 is given to the thumbnail image 82 by the processing unit 28F. After the processing of step ST22 is executed, the screen generation processing shifts to step ST24.

In step ST24, the processing unit 28F acquires the moving image identification information 80 related to the virtual viewpoint moving image 78 including the virtual viewpoint image 76 corresponding to the thumbnail image 82 obtained in step ST22 from the storage 30 (see Fig. 9), and associates the acquired moving image identification information 80 with the thumbnail image 82 (see Fig. 10). After the processing of step ST24 is executed, the screen generation processing shifts to step ST26.

In step ST26, the list screen generation unit 28G generates the list screen data 84 indicating the list screen 86 including the thumbnail image 82 with which the metadata 76A and the moving image identification information 80 are associated, and outputs the generated list screen data 84 to the storage 30 and the transmission/reception device 24 (see Fig. 10). As a result, the list screen data 84 is stored in the storage 30, and the list screen data 84 is transmitted to the user device 12 by the transmission/reception device 24. In the user device 12, the list screen 86 indicated by the list screen data 84 transmitted from the transmission/reception device 24 is displayed on the touch panel display 16 by the processor 52 (see Fig. 10). After the processing of step ST26 is executed, the screen generation processing shifts to step ST28.

In step ST28, the list screen generation unit 28G determines whether or not a condition for ending the screen generation processing (hereinafter, referred to as an "end condition") is satisfied. Examples of the end condition include a condition that an instruction to end the screen generation processing is received by the reception device, such as the touch panel display 16. In a case in which the end condition is not satisfied in step ST28, a negative determination is made, and the screen generation processing shifts to step ST10. In step ST28, in a case in which the end condition is satisfied, a positive determination is made, and the screen generation processing ends.

As described so far, in the image processing apparatus 10 according to the first embodiment, the thumbnail image 82 corresponding to the virtual viewpoint moving image 78 generated based on the plurality of captured images 64 and the plurality of pieces of viewpoint information 74 is acquired based on the plurality of captured images 64 and the plurality of pieces of viewpoint information 74. Then, the list screen data 84 is transmitted to the user device 12 as the data for displaying the thumbnail image 82 on the touch panel display 16 of the user device 12. In the user device 12, the list screen 86 indicated by the list screen data 84 is displayed on the touch panel display 16. Therefore, with the present configuration, it is possible to contribute to showing the thumbnail image 82 corresponding to the virtual viewpoint moving image 78 to the user 14.

In addition, in the image processing apparatus 10 according to the first embodiment, the specific section virtual viewpoint moving image 78A included in the virtual viewpoint moving image 78 is acquired. Then, the thumbnail image 82 corresponding to the virtual viewpoint image 76 of one frame among the virtual viewpoint images 76 of the plurality of frames included in the specific section virtual viewpoint moving image 78A is acquired. Then, the list screen data 84 is transmitted to the user device 12 as the data for displaying the thumbnail image 82 on the touch panel display 16 of the user device 12. Therefore, with the present configuration, it is possible to contribute to showing the thumbnail image 82 corresponding to the virtual viewpoint image 76 of one frame among the virtual viewpoint images 76 of the plurality of frames included in the specific section virtual viewpoint moving image 78A to the user 14.

In addition, in the image processing apparatus 10 according to the first embodiment, the thumbnail image 82 corresponding to the virtual viewpoint image 76 of one frame including the target subject 81 decided based on the time included in the virtual viewpoint moving image 78 is acquired. Then, the list screen data 84 is transmitted to the user device 12 as the data for displaying the thumbnail image 82 on the touch panel display 16 of the user device 12. Therefore, with the present configuration, it is possible to contribute to showing the thumbnail image 82 corresponding to the virtual viewpoint image 76 of one frame including the target subject 81 decided based on the time included in the virtual viewpoint moving image 78 to the user 14.

In addition, in the image processing apparatus 10 according to the first embodiment, the thumbnail image 82 corresponding to the virtual viewpoint image 76 of one frame decided based on the size of the target subject 81 in the specific section virtual viewpoint moving image 78A is acquired. Then, the list screen data 84 is transmitted to the user device 12 as the data for displaying the thumbnail image 82 on the touch panel display 16 of the user device 12. Therefore, with the present configuration, it is possible to contribute to showing the thumbnail image 82 corresponding to the virtual viewpoint image 76 of one frame decided based on the size of the target subject 81 to the user 14.

In addition, in the image processing apparatus 10 according to the first embodiment, the list screen data 84 is transmitted to the user device 12 as the data for displaying the virtual viewpoint moving image 78 corresponding to the selected thumbnail image 82 on the touch panel display 16 according to the selection of the thumbnail image 82 displayed on the touch panel display 16. Therefore, with the present configuration, it is possible to contribute to the user 14 to view the virtual viewpoint moving image 78 corresponding to the selected thumbnail image 82.

In addition, in the image processing apparatus 10 according to the first embodiment, the thumbnail image 82 and the virtual viewpoint moving image 78 are stored in the storage 30 in a state of being associated with each other. Therefore, with the present configuration, the virtual viewpoint moving image 78 can be obtained more quickly from the thumbnail image 82 than in a case in which the thumbnail image 82 and the virtual viewpoint moving image 78 are not associated with each other.

In addition, in the image processing apparatus 10 according to the first embodiment, data for displaying the thumbnail image 82 on the list screen data 84 in which the plurality of images are displayed in parallel is transmitted to the user device 12 as the list screen data 84. Therefore, with the present configuration, it is possible to contribute to the user 14 to list the plurality of images and the thumbnail image 82.

It should be noted that, in the embodiment described above, the virtual viewpoint moving image in the time slot in which the viewpoint position, the visual line direction, and the angle of view are fixed is used as the specific section virtual viewpoint moving image 78A, but the technology of the present disclosure is not limited to this. For example, the virtual viewpoint moving image in the time slot designated by the user 14 or the like among the virtual viewpoint moving images 78 may be used as the specific section virtual viewpoint moving image 78A, the virtual viewpoint moving image specified from at least one viewpoint information 74 including the movement speed information 74D indicating the movement speed within a predetermined speed range among the plurality of pieces of viewpoint information 74 may be used as the specific section virtual viewpoint moving image 78A, or the virtual viewpoint moving image specified from at least one viewpoint information 74 corresponding to a specific viewpoint position, a specific visual line direction, and/or a specific angle of view may be used as the specific section virtual viewpoint moving image 78A.

### [Second Embodiment]

In the second embodiment, the components as described in the first embodiment will be designated by the same reference numeral, the description thereof will be omitted, and a difference from the first embodiment will be described.

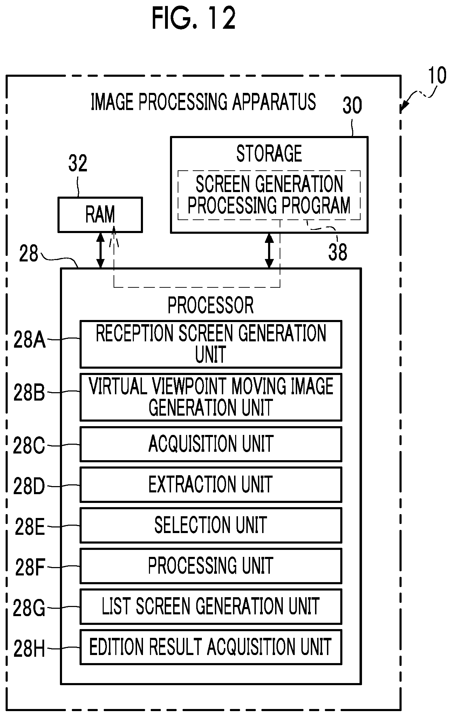

As shown in Fig. 12 as an example, the processor 28 of the image processing apparatus 10 according to the second embodiment is different from the processor 28 shown in Fig. 3 in that the processor 28 of the image processing apparatus 10 according to the second embodiment executes the screen generation processing program 38 to be further operated as an edition result acquisition unit 28H.

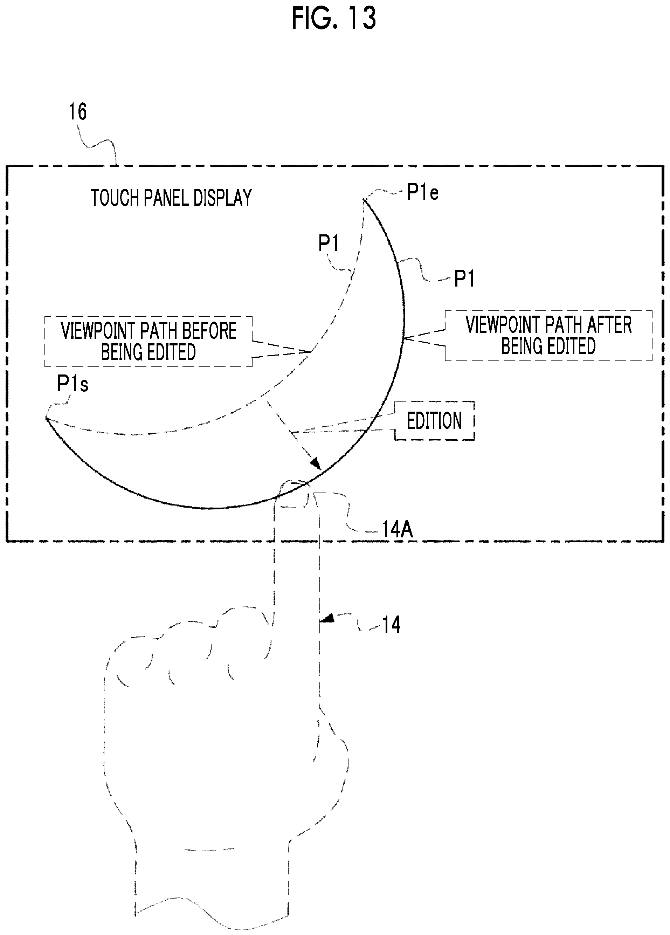

As shown in Fig. 13 as an example, the viewpoint path P1 is edited in a case in which an indication by the user 14 is received by the touch panel display 16. In the example shown in Fig. 13, the starting point P1s and the end point P1e are common before and after the edition of the viewpoint path P1, and the paths from the starting point P1s to the end point P1e are different.

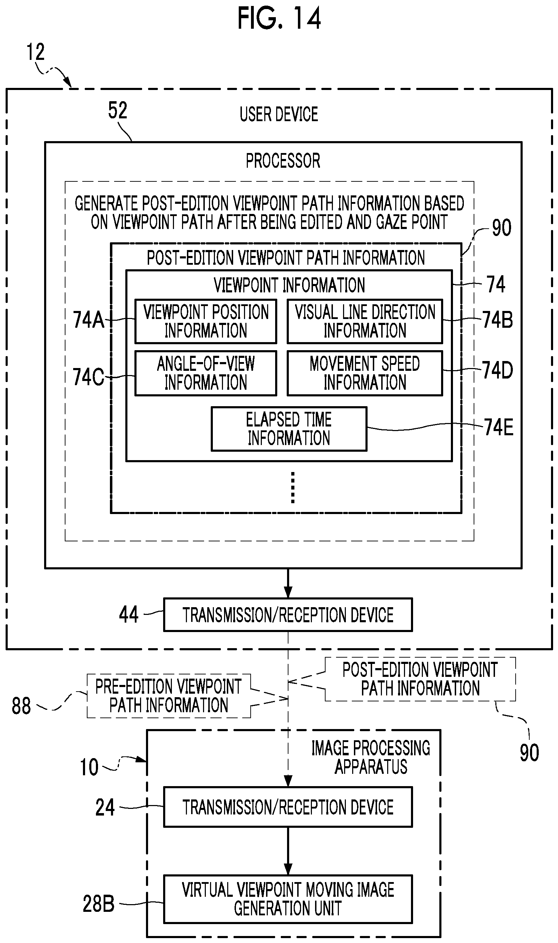

As an example, as shown in Fig. 14, in the user device 12, the processor 52 transmits the plurality of pieces of viewpoint information 74 described in the first embodiment, that is, the plurality of pieces of viewpoint information 74 related to the viewpoint path P1 before being edited to the image processing apparatus 10 via the transmission/reception device 44 as pre-edition viewpoint path information 88. In addition, the processor 52 generates post-edition viewpoint path information 90 based on the viewpoint path P1 after being edited and the gaze point GP (see Fig. 6). The post-edition viewpoint path information 90 includes the plurality of pieces of viewpoint information 74 related to the viewpoint path P1 after being edited. The processor 52 generates the post-edition viewpoint path information 90 according to the edition of the viewpoint path P1, and transmits the generated post-edition viewpoint path information 90 to the image processing apparatus 10 via the transmission/reception device 44.

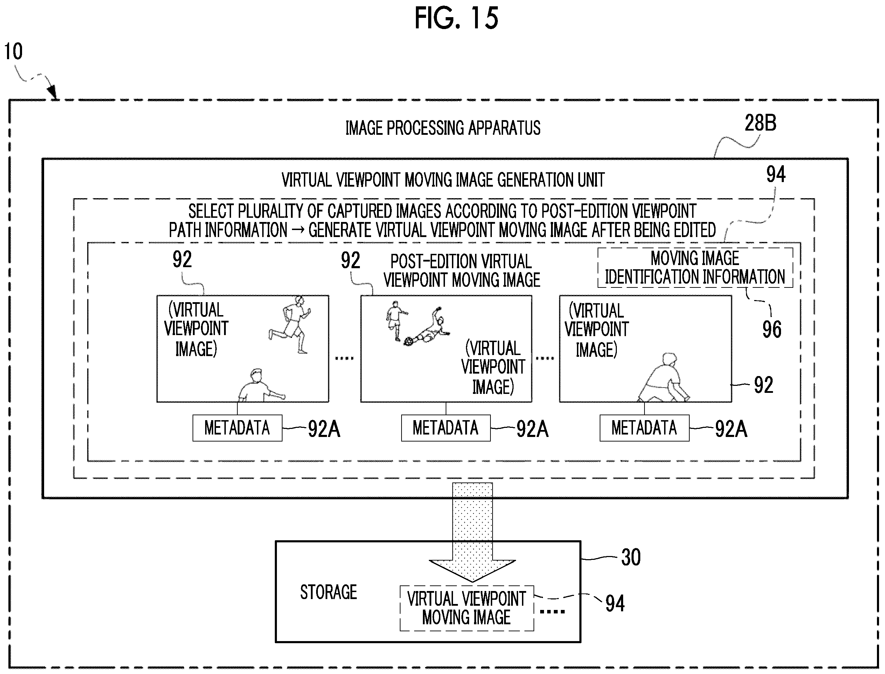

As shown in Fig. 15 as an example, the virtual viewpoint moving image generation unit 28B selects the plurality of captured images 64 (see Fig. 4) used for the generation of a virtual viewpoint image 92 according to the post-edition viewpoint path information 90 (see Fig. 14). That is, the virtual viewpoint moving image generation unit 28B selects the plurality of captured images 64 (see Fig. 4) used for the generation of the virtual viewpoint image 92, which is an image showing an aspect of the subject in a case in which the subject is observed according to the post-edition viewpoint path information 90, from among the plurality of captured images 64 (see Fig. 4) obtained by being captured by the plurality of imaging apparatuses 36 (see Figs. 1 and 4).

The virtual viewpoint moving image generation unit 28B generates a virtual viewpoint moving image 94 based on the post-edition viewpoint path information 90 and the plurality of captured images 64. That is, the virtual viewpoint moving image generation unit 28B generates the virtual viewpoint moving image 94, which is a moving image showing an aspect of the subject in a case in which the subject is observed from the viewpoint specified by the post-edition viewpoint path information 90 (for example, the plurality of pieces of viewpoint information 74 for specifying the viewpoint path P1 after being edited shown in Fig. 13), based on the plurality of captured images 64 selected according to the post-edition viewpoint path information 90.

For example, the virtual viewpoint moving image generation unit 28B generates the virtual viewpoint images 92 of the plurality of frames according to the viewpoint path P1 after being edited shown in Fig. 14. That is, the virtual viewpoint moving image generation unit 28B generates the virtual viewpoint image 92 for each viewpoint on the viewpoint path P1 after being edited. The virtual viewpoint moving image generation unit 28B generates the virtual viewpoint moving image 94 by arranging the virtual viewpoint images 92 of the plurality of frames in a time series. The virtual viewpoint moving image 94 generated in this way is data for being displayed on the touch panel display 16 of the user device 12. A time in which the virtual viewpoint moving image 94 is displayed on the touch panel display 16 is decided according to the plurality of pieces of viewpoint information 74 included in the post-edition viewpoint path information 90 (for example, the plurality of pieces of viewpoint information 74 indicating the viewpoint path P1 after being edited shown in Fig. 13).

The virtual viewpoint moving image generation unit 28B gives metadata 92A to each of the virtual viewpoint images 92 of the plurality of frames included in the virtual viewpoint moving image 94. The metadata 92A is generated by the virtual viewpoint moving image generation unit 28B based on, for example, the imaging condition information 64A (see Fig. 4) included in the captured image 64 used for the generation of the virtual viewpoint image 92. The metadata 92A includes a time point at which the virtual viewpoint image 92 is generated, and information based on the imaging condition information 64A.

The virtual viewpoint moving image generation unit 28B gives moving image identification information 96 to the virtual viewpoint moving image 94 each time the virtual viewpoint moving image 94 is generated. The moving image identification information 96 includes an identifier uniquely assigned to the virtual viewpoint moving image 94, and is used for specifying the virtual viewpoint moving image 94. In addition, the moving image identification information 96 includes metadata, such as a time point at which the virtual viewpoint moving image 94 is generated and/or a total playback time of the virtual viewpoint moving image 94.

The virtual viewpoint moving image generation unit 28B stores the generated virtual viewpoint moving image 94 in the storage 30. The storage 30 stores, for example, the virtual viewpoint moving image 94 generated by the virtual viewpoint moving image generation unit 28B for the plurality of viewpoint paths including the viewpoint path P1 after being edited.

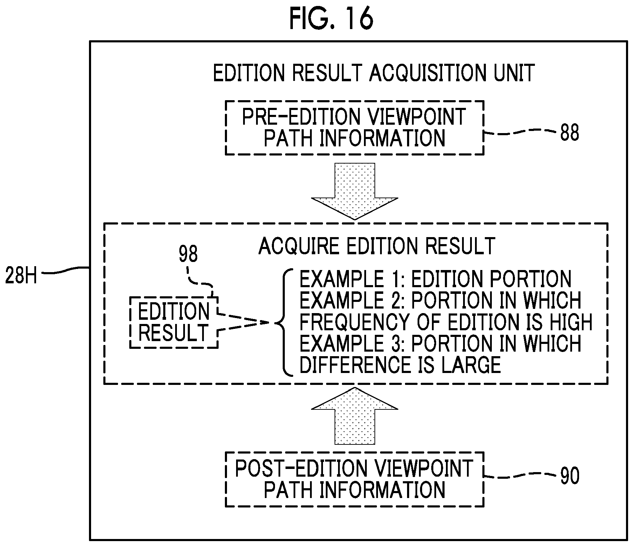

As shown in Fig. 16 as an example, the edition result acquisition unit 28H acquires an edition result 98, which is a result of editing the viewpoint path P1, with reference to the pre-edition viewpoint path information 88 and the post-edition viewpoint path information 90. A first example of the edition result 98 is a portion in which the viewpoint path P1 is edited (hereinafter, also referred to as an "edition portion"). The edition portion is specified from, for example, at least one viewpoint position information 74A that does not match the plurality of pieces of viewpoint position information 74A included in the pre-edition viewpoint path information 88 among the plurality of pieces of viewpoint position information 74A included in the post-edition viewpoint path information 90. A second example of the edition result 98 is a portion (hereinafter, also referred to as an "edition high frequency portion") in which a frequency of editing the viewpoint path P1 is higher than a predetermined frequency (for example, three times). The edition high frequency portion is specified from, for example, at least one viewpoint position information 74A in which the edition frequency exceeds the predetermined frequency among the plurality of pieces of viewpoint position information 74A included in the post-edition viewpoint path information 90. A third example of the edition result 98 is a portion of the viewpoint path P1 after being edited in which a difference from the viewpoint path P1 before being edited is large (hereinafter, also referred to as a "difference portion"). The difference portion is specified from, for example, at least one viewpoint position information 74Ain which a distance from the plurality of pieces of viewpoint position information 74A included in the pre-edition viewpoint path information 88 is equal to or more than a predetermined distance (for example, several tens of pixels in the bird's-eye view video 72) among the plurality of pieces of viewpoint position information 74A included in the post-edition viewpoint path information 90.

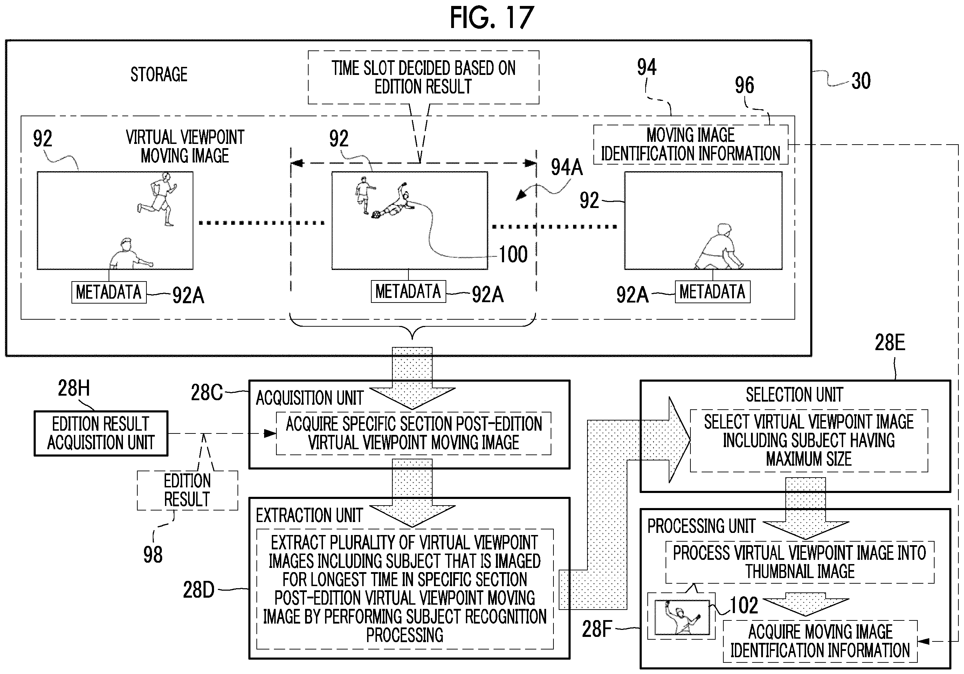

As shown in Fig. 17 as an example, the acquisition unit 28C acquires the edition result 98 from the edition result acquisition unit 28H. The acquisition unit 28C acquires a specific section virtual viewpoint moving image 94A from the virtual viewpoint moving image 94 stored in the storage 30. The specific section virtual viewpoint moving image 94A is a virtual viewpoint moving image in a time slot (for example, the edition portion, the edition high frequency portion, or the difference portion) specified from the edition result 98 acquired by the acquisition unit 28C among the virtual viewpoint moving images 94.

The extraction unit 28D specifies a target subject 100 decided based on a time included in the virtual viewpoint moving image 94 (in the example shown in Fig. 17, a time slot specified from the edition result 98). Here, the target subject 100 is an example of a "first subject" according to the technology of the present disclosure.

Examples of the time included in the virtual viewpoint moving image 94 include a length of time in which the subject is imaged, a first and/or last time slot (for example, several seconds) or a time point in the total playback time of the virtual viewpoint moving image 94.

In the second embodiment, the extraction unit 28D specifies the subject that is imaged for the longest time in the specific section virtual viewpoint moving image 94A as the target subject 100 by performing the subject recognition processing of the AI method with respect to all the virtual viewpoint images 92 included in the specific section virtual viewpoint moving image 94A acquired by the acquisition unit 28C. Then, the extraction unit 28D extracts the virtual viewpoint images 92 of the plurality of frames including the specified target subject 100 from the specific section virtual viewpoint moving image 94A.

It should be noted that, here, although the form example is described in which the subject recognition processing of the AI method is performed, this is merely an example, and the subject recognition processing of the template matching method may be performed. In addition, an identifier (hereinafter, referred to as a "subject identifier") for specifying the subject is given in advance to the subject included in all the virtual viewpoint images 92 included in the virtual viewpoint moving image 94, the extraction unit 28D may specify the subject included in each virtual viewpoint image 92 with reference to the subject identifier.

The selection unit 28E selects the virtual viewpoint image 92 of one frame decided based on a size of the target subject 100 in the virtual viewpoint images 92 of the plurality of frames extracted by the extraction unit 28D. For example, the selection unit 28E selects the virtual viewpoint image 92 of one frame including the target subject 100 having the maximum size from among the virtual viewpoint images 92 of the plurality of frames extracted by the extraction unit 28D. For example, in a case in which the subject recognition processing of the AI method is performed by the extraction unit 28D, the selection unit 28E specifies the virtual viewpoint image 92 including the target subject 100 having the maximum size by referring to a size of a bounding box used in the subject recognition processing of the AI method.

Here, the plurality of frames extracted by the extraction unit 28D are examples of a "plurality of frames including a first subject in the imaging region in the virtual viewpoint moving image" according to the technology of the present disclosure. In addition, the virtual viewpoint image 92 of one frame including the target subject 100 having the maximum size is an example of an "image related to a first frame" according to the technology of the present disclosure. In addition, the "maximum size" is an example of a "size of the first subject" according to the technology of the present disclosure.

It should be noted that, although the target subject 100 having the maximum size is described as an example here, this is merely an example, and the target subject 100 having a designated size other than the maximum size (for example, the next largest size after the maximum size) may be used, the target subject 100 having the maximum size within a size range decided in advance (for example, a size range decided according to an indication received by the reception device 50 or the like) may be used, or the target subject 100 having a size decided according to an indication received by the reception device 50 or the like may be used.

The processing unit 28F processes the virtual viewpoint moving image 94 into an image having a size different from the size of the virtual viewpoint moving image 94. Examples of the image having the size different from the size of the virtual viewpoint moving image 94 include an image having a smaller amount of data than the virtual viewpoint moving image 94 (for example, an image for at least one frame), an image in which the virtual viewpoint moving image 94 is thinned out (for example, a frame-by-frame image), an image in which a display size of the virtual viewpoint image 92 for at least one frame included in the virtual viewpoint moving image 94 is reduced, and/or an image obtained by thinning out the pixels in the virtual viewpoint image 92 for at least one frame included in the virtual viewpoint moving image 94.

The processing unit 28F generates an image related to the virtual viewpoint image 92 of one frame among all the virtual viewpoint images 92 included in the virtual viewpoint moving image 94. The image related to the virtual viewpoint image 92 of one frame is, for example, an image showing a content of the virtual viewpoint moving image 94. Here, the image related to the virtual viewpoint image 92 of one frame is an example of an "image related to a first frame" according to the technology of the present disclosure. Examples of the image related to the virtual viewpoint image 92 of one frame include the entire virtual viewpoint image 92 of one frame itself, a part cut out from the virtual viewpoint image 92 of one frame, and/or an image in which the virtual viewpoint image 92 of one frame is processed.

The processing unit 28F acquires a thumbnail image 102 corresponding to the virtual viewpoint moving image 94 based on the plurality of captured images 64 and the plurality of pieces of viewpoint information 74. In the second embodiment, the processing unit 28F acquires the thumbnail image 102 based on the edition result 98 corresponding to the edition result of the plurality of pieces of viewpoint information 74. The thumbnail image 102 is an example of a "representative image" according to the technology of the present disclosure. That is, the processing unit 28F converts the virtual viewpoint image 92 of one representative frame among all the virtual viewpoint images 92 included in the virtual viewpoint moving image 94 into a thumbnail.

The processing unit 28F processes, for example, the virtual viewpoint image 92 selected by the selection unit 28E into the thumbnail image 102. As the method of processing the virtual viewpoint image 92 into the thumbnail image 102, a method of processing the virtual viewpoint moving image 94 into the image having the size different from the size of the virtual viewpoint moving image 94 can be used. In addition, the processing unit 28F associates the metadata 92A, which is given to the virtual viewpoint image 92 before being converted into the thumbnail, with the thumbnail image 102. In addition, the processing unit 28F acquires the moving image identification information 96 from the virtual viewpoint moving image 94 including the virtual viewpoint image 92 converted into the thumbnail.

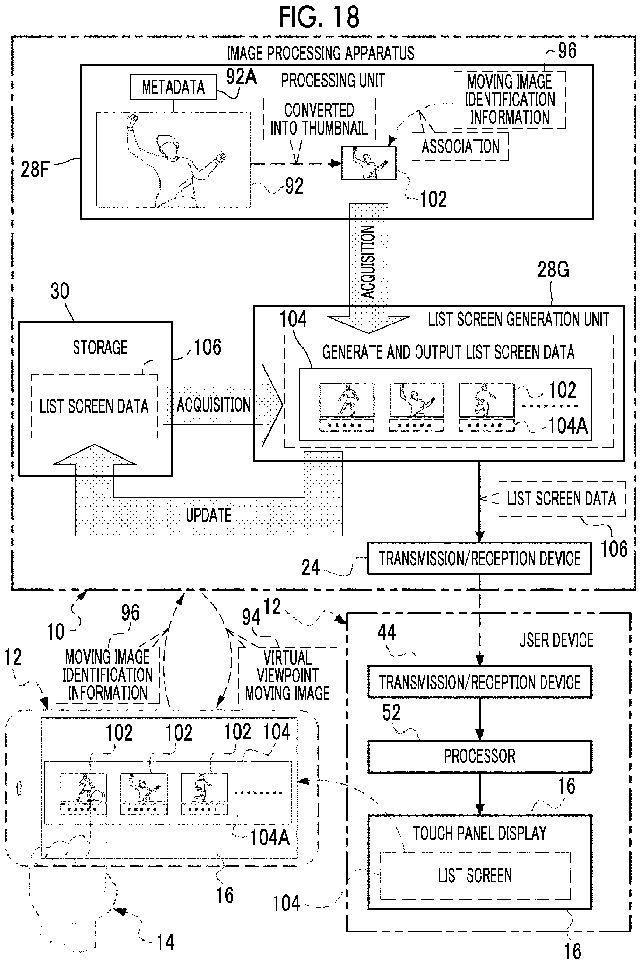

As shown in Fig. 18 as an example, the processing unit 28F associates the moving image identification information 96 with the thumbnail image 102 obtained by converting the virtual viewpoint image 92 into the thumbnail.

The list screen generation unit 28G acquires the thumbnail image 102 with which the metadata 92A and the moving image identification information 96 are associated from the processing unit 28F. The list screen generation unit 28G generates reference information 104A based on the metadata 92A and/or the moving image identification information 96, and associates the reference information 104A with the thumbnail image 102. The list screen generation unit 28G generates list screen data 106 indicating a list screen 104 including the thumbnail image 102 with which the reference information 104Ais associated. The list screen data 106 is data for displaying the thumbnail image 102 on the touch panel display 16 of the user device 12. The list screen generation unit 28G outputs the generated list screen data 106 to the transmission/reception device 24, and stores the generated list screen data 106 in the storage 30. As a result, the thumbnail image 102 associated with the moving image identification information 96 is stored in the storage 30. That is, since the moving image identification information 96 is the identifier uniquely assigned to the virtual viewpoint moving image 94, the storage 30 stores the thumbnail image 102 and the virtual viewpoint moving image 94 in a state of being associated with each other. The list screen data 106 is an example of "data" and "first data" according to the technology of the present disclosure.

Examples of the reference information 104A associated with the thumbnail image 102 by the list screen generation unit 28G include character information. Examples of the character information include a time point at which the virtual viewpoint moving image 94 is generated (for example, a time point specified from the imaging condition information 64A shown in Fig. 4), information related to the target subject 100 included in the thumbnail image 102 (for example, a name of the target subject 100 and/or a team to which the target subject 100 belongs), the total playback time of the virtual viewpoint moving image 94, a title of the virtual viewpoint moving image 94, and/or a name of a creator of the virtual viewpoint moving image 94.

In a state in which the list screen data 106 is stored in the storage 30, in a case in which the processing unit 28F generates the thumbnail image 102 and associates the metadata 92A and the moving image identification information 96 with the generated thumbnail image 102, the list screen generation unit 28G acquires the list screen data 106 from the storage 30, and updates the list screen data 106. That is, the list screen generation unit 28G acquires the thumbnail image 102 with which the metadata 92A and the moving image identification information 96 are associated from the processing unit 28F to generate the reference information 104A. The list screen generation unit 28G associates the generated reference information 104A with the thumbnail image 102. Then, the list screen generation unit 28G includes the thumbnail image 102 with which the reference information 104A is associated in the list screen 104 to update the list screen data 106. The list screen generation unit 28G outputs the generated list screen data 106 to the transmission/reception device 24, and stores the updated list screen data 106 in the storage 30.

A plurality of thumbnail images 102 are included in the list screen 104 indicated by the updated list screen data 106. In addition, in the list screen 104 indicated by the updated list screen data 106, the reference information 104A is associated with each of the plurality of thumbnail images 102.

The transmission/reception device 24 transmits the list screen data 106 input from the list screen generation unit 28G to the user device 12. In the user device 12, the transmission/reception device 44 receives the list screen data 106 transmitted from the image processing apparatus 10. The processor 52 acquires the list screen data 106 received by the transmission/reception device 44, and displays the list screen 104 indicated by the acquired list screen data 106 on the touch panel display 16. On the list screen 104, a plurality of images are displayed in parallel. In the example shown in Fig. 18, the plurality of thumbnail images 102 are displayed on the list screen 104 together with the reference information 104A. It should be noted that, here, although the form example is described in which the plurality of thumbnail images 102 are displayed on the list screen 104, only one thumbnail image 102 may be displayed on the list screen 104. In addition, the plurality of thumbnail images 102 do not always have to be displayed in parallel.

In a state in which the list screen 104 is displayed on the touch panel display 16, the user 14 selects the thumbnail image 102 by tapping any one of the thumbnail images 102 in the list screen 104 via the touch panel display 16. In a case in which the thumbnail image 102 is selected, the processor 28 (see Figs. 1 and 12) of the image processing apparatus 10 outputs data for displaying the virtual viewpoint moving image 94 on the touch panel display 16 on the user device 12.

For example, in a case in which the thumbnail image 102 is selected by the user 14 via the touch panel display 16, the processor 52 of the user device 12 transmits the moving image identification information 96 associated with the selected thumbnail image 102 to the image processing apparatus 10 via the transmission/reception device 44. In the image processing apparatus 10, the moving image identification information 96 is received by the transmission/reception device 24. The processor 28 of the image processing apparatus 10 (see Figs. 1 and 12) acquires the virtual viewpoint moving image 94 corresponding to the moving image identification information 96 received by the transmission/reception device 24 from the storage 30, and transmits the acquired virtual viewpoint moving image 94 to the user device 12 via the transmission/reception device 24. In the user device 12, the virtual viewpoint moving image 94 transmitted from the image processing apparatus 10 is received by the transmission/reception device 44. The processor 52 of the user device 12 displays the virtual viewpoint moving image 94 received by the transmission/reception device 44 on the touch panel display 16. For example, the virtual viewpoint moving image 94 is displayed on the virtual viewpoint moving image screen 68 (see Fig. 4) of the touch panel display 16.

It should be noted that, the form example is described in which the virtual viewpoint moving image 94 is displayed on the touch panel display 16, but this is merely an example, and for example, the virtual viewpoint moving image 94 may be displayed on a display directly or indirectly connected to the image processing apparatus 10 instead of the touch panel display 16 or together with the touch panel display 16.

In addition, although the form example is described in which the thumbnail image 102 is selected by tapping any one of the thumbnail images 102 in the list screen 104, this is merely an example, and for example, the thumbnail image 102 may be selected by flicking, swiping, and/or long pressing the thumbnail image 102 via the touch panel display 16, the thumbnail image 102 may be selected by performing voice recognition processing with respect to a voice acquired by the microphone 48, or the thumbnail image 102 may be selected by a mouse and/or a keyboard.

As described so far, in the image processing apparatus 10 according to the second embodiment, the thumbnail image 102 is acquired based on the edition result 98 obtained in a state of being associated with the edition performed with respect to the viewpoint path P1. That is, the thumbnail image 102 corresponding to the virtual viewpoint images 92 specified based on the edition result 98 from among the plurality of virtual viewpoint images 92 included in the virtual viewpoint moving image 94 is acquired. The list screen 104 including the thumbnail image 102 acquired by the image processing apparatus 10 is displayed on the touch panel display 16 of the user device 12. Therefore, with the present configuration, it is possible to contribute to showing the thumbnail image 102 obtained based on the edition result 98 to the user 14.

It should be noted that, in the second embodiment, as an example of the edition result 98, the result of editing only the viewpoint path P1 is described, but the technology of the present disclosure is not limited to this. The edition result 98 may include, in addition to the viewpoint path P1, the result of edition performed with respect to the plurality of viewpoint paths indicating a plurality of virtual viewpoint moving images. In this case, the plurality of pieces of viewpoint information 74 include the plurality of viewpoint paths. That is, the plurality of viewpoint paths are defined by the plurality of pieces of viewpoint information 74. Then, the processor 28 specifies at least one virtual viewpoint image (that is, at least one virtual viewpoint image obtained from at least one virtual viewpoint moving image) based on the result of editing at least one viewpoint path among the plurality of viewpoint paths. The processor 28 generates at least one thumbnail image corresponding to at least one specified virtual viewpoint image, and generates the list screen 104 including the generated thumbnail image. As a result, it is possible to contribute to showing at least one thumbnail image corresponding to at least one virtual viewpoint image obtained based on the result of edition performed with respect to the plurality of viewpoint paths to the user 14.

### [Third Embodiment]

In the third embodiment, the components as described in the first and second embodiments will be designated by the same reference numeral, the description thereof will be omitted, and a difference from the first and second embodiments will be described.

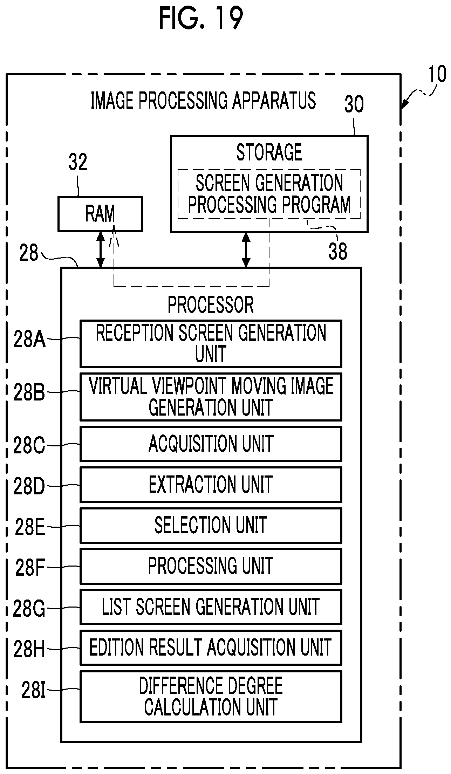

As shown in Fig. 19 as an example, the processor 28 of the image processing apparatus 10 according to the third embodiment is different from the processor 28 shown in Fig. 12 in that the processor 28 of the image processing apparatus 10 according to the third embodiment executes the screen generation processing program 38 to be further operated as a difference degree calculation unit 281.

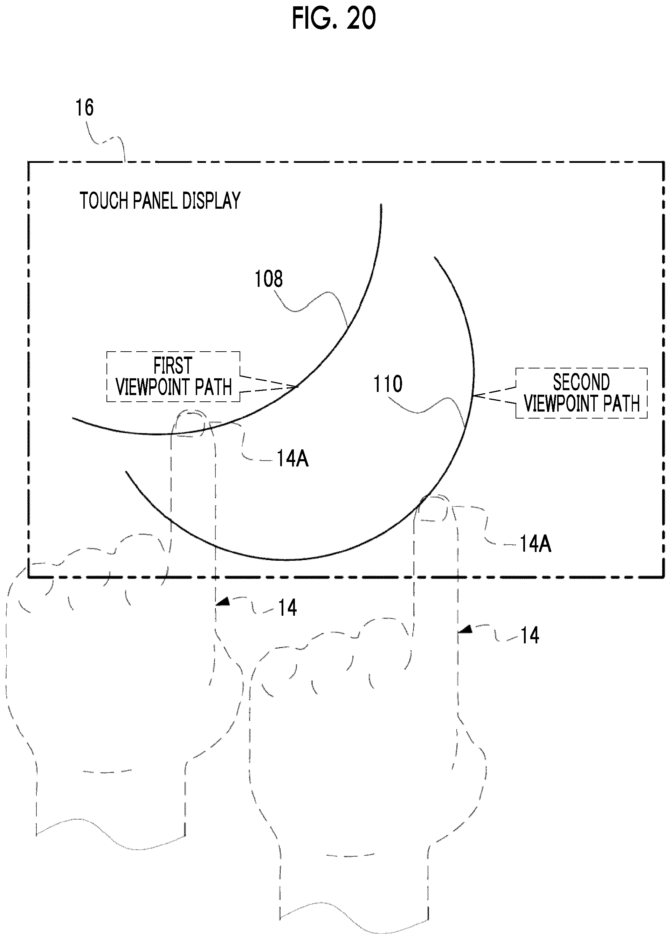

In the third embodiment, for convenience of description, as shown in Fig. 20 as an example, the description will be made on the premise that a first viewpoint path 108 and a second viewpoint path 110, which are present at positions different from each other, are designated as the viewpoint path of a processing target from among the plurality of viewpoint paths by the user 14 via the touch panel display 16.

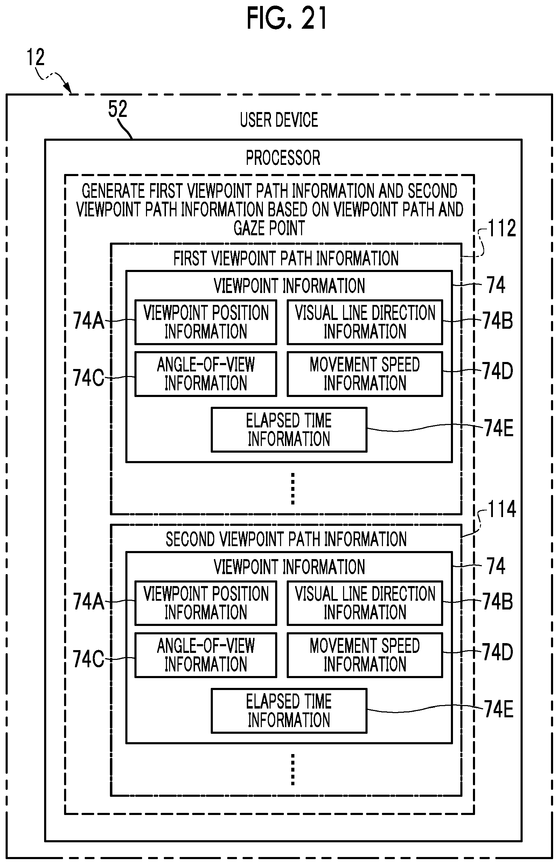

As shown in Fig. 21 as an example, in the user device 12, the processor 52 generates first viewpoint path information 112 based on the first viewpoint path 108 (see Fig. 20) and a first gaze point (for example, the gaze point GP shown in Fig. 6). The first viewpoint path information 112 includes the plurality of pieces of viewpoint information 74 described in the first and second embodiments. In addition, the processor 52 generates second viewpoint path information 114 based on the second viewpoint path 110 (see Fig. 20) and a second gaze point (for example, the gaze point GP shown in Fig. 6). The second viewpoint path 110 includes the plurality of pieces of viewpoint information 74 described in the first and second embodiments. The plurality of pieces of viewpoint information 74 included in the first viewpoint path information 112 indicate features of the first viewpoint path 108, and the plurality of pieces of viewpoint information 74 included in the second viewpoint path information 114 indicate features of the second viewpoint path 110. Therefore, the contents of the plurality of pieces of viewpoint information 74 included in the first viewpoint path information 112 and the plurality of pieces of viewpoint information 74 included in the second viewpoint path information 114 are different from each other.

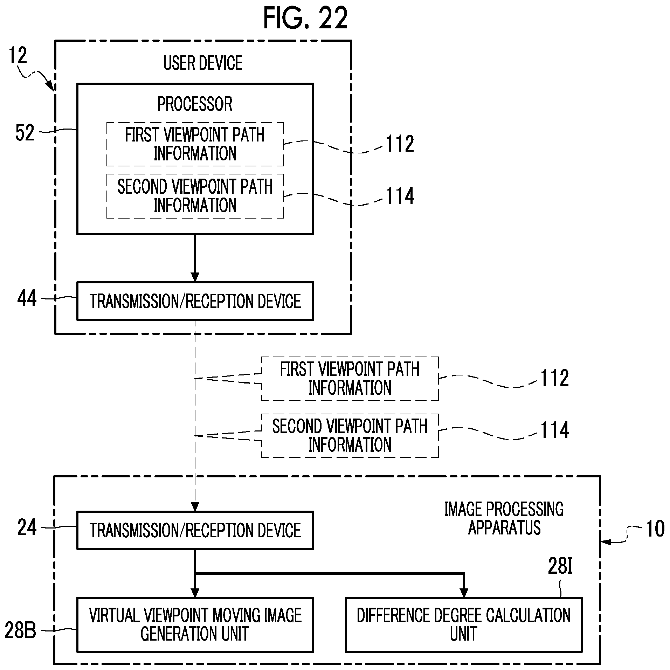

As shown in Fig. 22 as an example, the processor 52 of the user device 12 transmits the first viewpoint path information 112 and the second viewpoint path information 114 to the image processing apparatus 10 via the transmission/reception device 44. In the image processing apparatus 10, the transmission/reception device 24 receives the first viewpoint path information 112 and the second viewpoint path information 114 transmitted from the image processing apparatus 10. The virtual viewpoint moving image generation unit 28B and the difference degree calculation unit 281 acquire the first viewpoint path information 112 and the second viewpoint path information 114 received by the transmission/reception device 24.

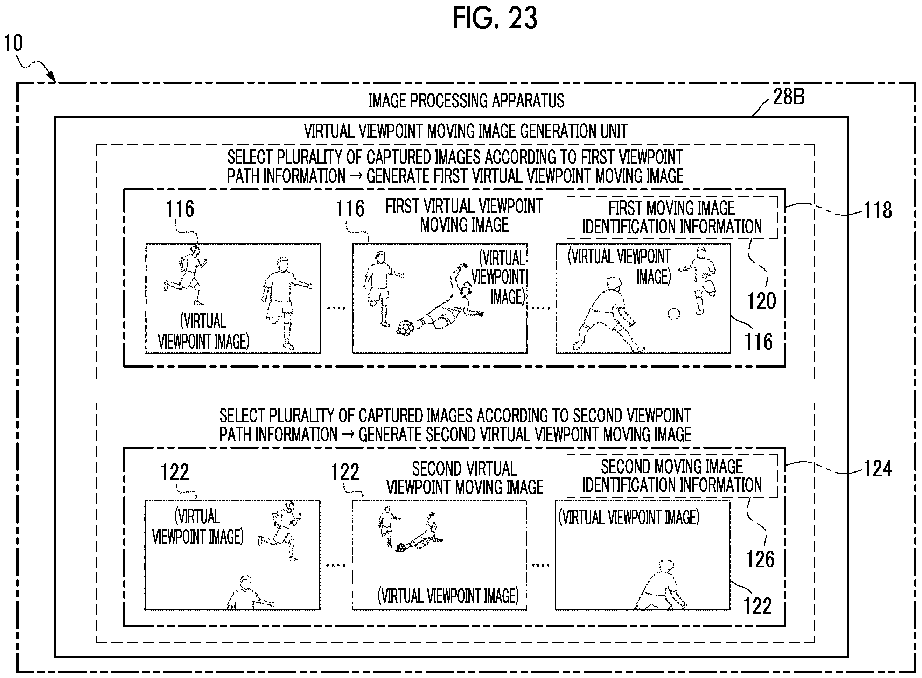

As shown in Fig. 23 as an example, the virtual viewpoint moving image generation unit 28B selects the plurality of captured images 64 (see Fig. 4) used for the generation of a virtual viewpoint image 116 according to the first viewpoint path information 112 (see Figs. 21 and 22). That is, the virtual viewpoint moving image generation unit 28B selects the plurality of captured images 64 (see Fig. 4) used for the generation of the virtual viewpoint image 116, which is an image showing an aspect of the subject in a case in which the subject is observed according to the first viewpoint path information 112, from among the plurality of captured images 64 (see Fig. 4) obtained by being captured by the plurality of imaging apparatuses 36 (see Figs. 1 and 4).

The virtual viewpoint moving image generation unit 28B generates a first virtual viewpoint moving image 118 based on the first viewpoint path information 112 and the plurality of captured images 64. That is, the virtual viewpoint moving image generation unit 28B generates the first virtual viewpoint moving image 118, which is a moving image showing an aspect of the subject in a case in which the subject is observed from the viewpoint specified by the first viewpoint path information 112, based on the plurality of captured images 64 selected according to the first viewpoint path information 112.

For example, the virtual viewpoint moving image generation unit 28B generates the virtual viewpoint images 116 of a plurality of frames according to the first viewpoint path 108 (see Fig. 20). That is, the virtual viewpoint moving image generation unit 28B generates the virtual viewpoint image 116 for each viewpoint on the first viewpoint path 108. The virtual viewpoint moving image generation unit 28B generates the first virtual viewpoint moving image 118 by arranging the virtual viewpoint images 116 of the plurality of frames in a time series. The first virtual viewpoint moving image 118 generated in this way is data for being displayed on the touch panel display 16 of the user device 12. A time in which the first virtual viewpoint moving image 118 is displayed on the touch panel display 16 is decided according to the plurality of pieces of viewpoint information 74 (see Fig. 21) included in the first viewpoint path information 112.

The virtual viewpoint moving image generation unit 28B gives first metadata (not shown) to each of the virtual viewpoint images 116 of the plurality of frames included in the first virtual viewpoint moving image 118. The technical significance of the first metadata given to each of the virtual viewpoint images 116 of the plurality of frames included in the first virtual viewpoint moving image 118 is the same as the metadata 76A described in the first embodiment and the metadata 92A described in the second embodiment.

The virtual viewpoint moving image generation unit 28B gives first moving image identification information 120 to the first virtual viewpoint moving image 118 each time the first virtual viewpoint moving image 118 is generated. The first moving image identification information 120 includes an identifier uniquely assigned to the first virtual viewpoint moving image 118, and is used for specifying the first virtual viewpoint moving image 118. In addition, the first moving image identification information 120 includes metadata, such as a time point at which the first virtual viewpoint moving image 118 is generated and/or a total playback time of the first virtual viewpoint moving image 118.

The virtual viewpoint moving image generation unit 28B selects the plurality of captured images 64 (see Fig. 4) used for the generation of a virtual viewpoint image 122 according to the second viewpoint path information 114 (see Figs. 21 and 22). That is, the virtual viewpoint moving image generation unit 28B selects the plurality of captured images 64 (see Fig. 4) used for the generation of the virtual viewpoint image 122, which is an image showing an aspect of the subject in a case in which the subject is observed according to the second viewpoint path information 114, from among the plurality of captured images 64 (see Fig. 4) obtained by being captured by the plurality of imaging apparatuses 36 (see Figs. 1 and 4).

The virtual viewpoint moving image generation unit 28B generates a second virtual viewpoint moving image 124 based on the second viewpoint path information 114 and the plurality of captured images 64. That is, the virtual viewpoint moving image generation unit 28B generates the second virtual viewpoint moving image 124, which is a moving image showing an aspect of the subject in a case in which the subject is observed from the viewpoint specified by the second viewpoint path information 114, based on the plurality of captured images 64 selected according to the second viewpoint path information 114.

For example, the virtual viewpoint moving image generation unit 28B generates the virtual viewpoint images 122 of a plurality of frames according to the second viewpoint path 110 (see Fig. 20). That is, the virtual viewpoint moving image generation unit 28B generates the virtual viewpoint image 122 for each viewpoint on the second viewpoint path 110. The virtual viewpoint moving image generation unit 28B generates the second virtual viewpoint moving image 124 by arranging the virtual viewpoint images 122 of the plurality of frames in a time series. The second virtual viewpoint moving image 124 generated in this way is data for being displayed on the touch panel display 16 of the user device 12. A time in which the second virtual viewpoint moving image 124 is displayed on the touch panel display 16 is decided according to the plurality of pieces of viewpoint information 74 (see Fig. 21) included in the second viewpoint path information 114.

The virtual viewpoint moving image generation unit 28B gives second metadata (not shown) to each of the virtual viewpoint images 122 of the plurality of frames included in the second virtual viewpoint moving image 124. The technical significance of the second metadata given to each of the virtual viewpoint images 122 of the plurality of frames included in the second virtual viewpoint moving image 124 is the same as the metadata 76A described in the first embodiment and the metadata 92A described in the second embodiment.

The virtual viewpoint moving image generation unit 28B gives second moving image identification information 126 to the second virtual viewpoint moving image 124 each time the second virtual viewpoint moving image 124 is generated. The second moving image identification information 126 includes an identifier uniquely assigned to the second virtual viewpoint moving image 124, and is used for specifying the second virtual viewpoint moving image 124. In addition, the second moving image identification information 126 includes metadata, such as a time point at which the second virtual viewpoint moving image 124 is generated and/or a total playback time of the second virtual viewpoint moving image 124.

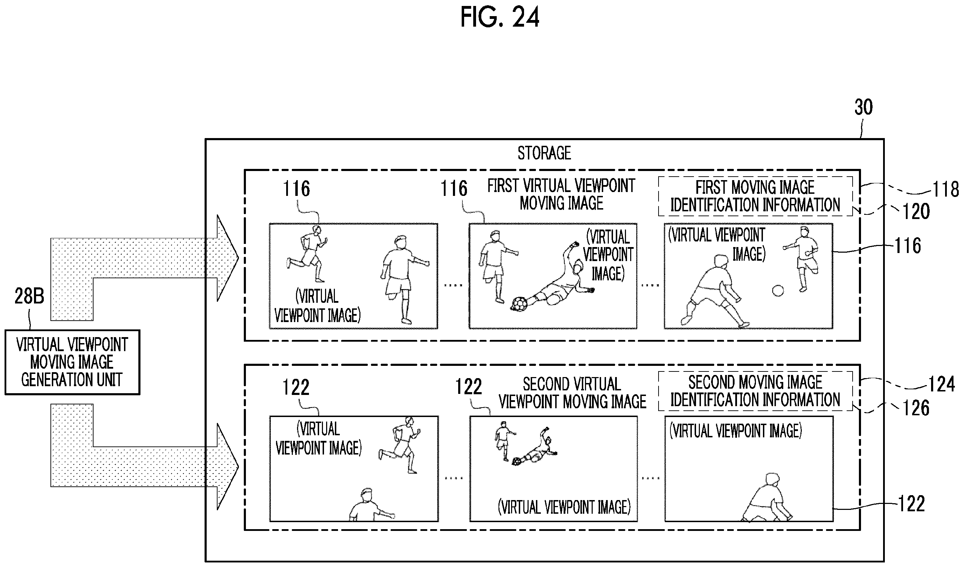

As shown in Fig. 24 as an example, the virtual viewpoint moving image generation unit 28B stores the generated first virtual viewpoint moving image 118 in the storage 30. In addition, the virtual viewpoint moving image generation unit 28B also stores the generated second virtual viewpoint moving image 124 in the storage 30.

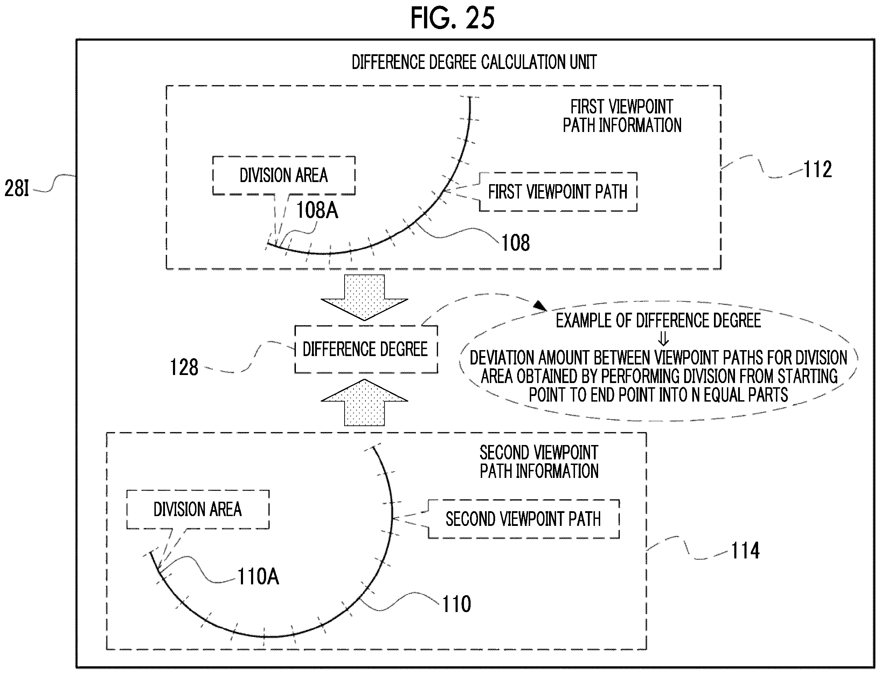

As shown in Fig. 25 as an example, the difference degree calculation unit 281 calculates a difference degree 128 between the first viewpoint path information 112 and the second viewpoint path information 114. The difference degree 128 can also be referred to as a difference degree among the plurality of pieces of viewpoint information 74 included in the first viewpoint path information 112 and the plurality of pieces of viewpoint information 74 included in the second viewpoint path information 114 are different from each other. Examples of the difference degree 128 include a deviation amount between a division area 108A of the first viewpoint path 108 and a division area 110A of the second viewpoint path 110. The difference degree 128 is an example of a "difference degree" according to the technology of the present disclosure.

The division area 108A is an area obtained by dividing the first viewpoint path 108 from the starting point to the end point into N equal parts. The division area 110A is an area obtained by dividing the second viewpoint path 110 from the starting point to the end point into N equal parts. Here, "N" is a natural number of 2 or more, and is decided, for example, according to an indication received by the reception device 50 or the like. "N" may be a fixed value, or may be a variable value that is changed according to the indication received by the reception device 50 and/or various types of information (for example, the imaging condition).

In the third embodiment, the difference degree calculation unit 281 calculates, as the difference degree 128, the deviation amount between the division areas of a plurality of division areas 108A from the starting point to the end point of the first viewpoint path 108 and a plurality of division areas 1 10A from the starting point to the end point of the second viewpoint path 110. That is, the difference degree 128 is information in which the deviation amount between the corresponding division areas of the plurality of division areas 108A of the first viewpoint path 108 and the plurality of division areas 1 10A of the second viewpoint path 110 is associated with each division area 108A and each division area 110A from the starting point to the end point.

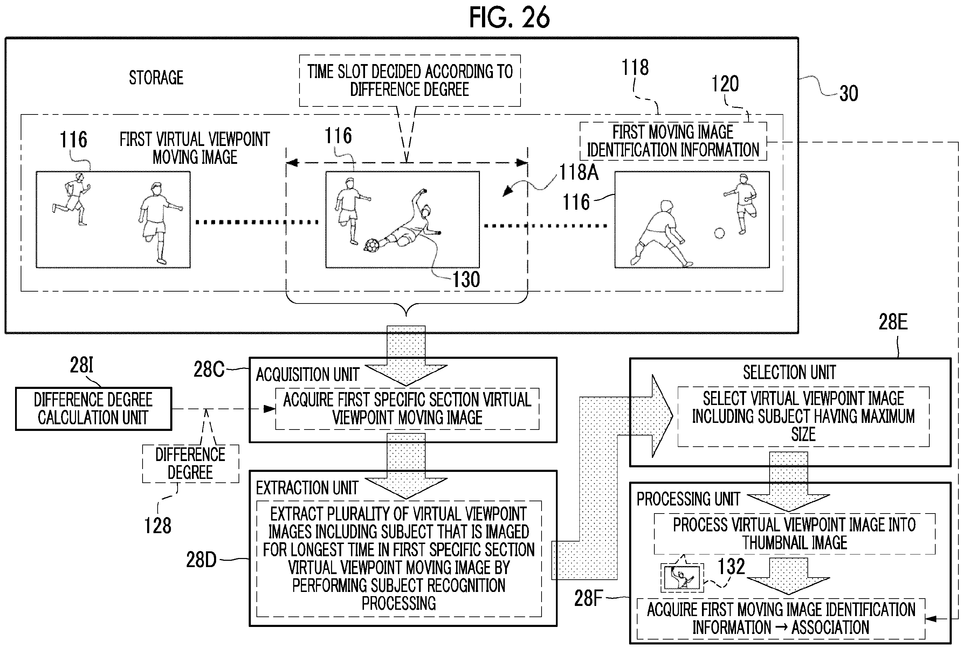

As shown in Fig. 26 as an example, the acquisition unit 28C acquires the difference degree 128 from the difference degree calculation unit 28I. The acquisition unit 28C acquires a first specific section virtual viewpoint moving image 118A from the first virtual viewpoint moving image 118 stored in the storage 30. The first specific section virtual viewpoint moving image 118A is a virtual viewpoint moving image in a time slot specified from the difference degree 128 acquired by the acquisition unit 28C in the first virtual viewpoint moving image 118. Here, the time slot specified from the difference degree 128 is, for example, a time slot corresponding to the division area 108A (see Fig. 25) with which a maximum deviation amount among a plurality of deviation amounts represented by the difference degree 128 is associated. Here, the maximum deviation amount is described as an example, but a minimum deviation amount may be used, a median value of the deviation amount may be used, or a most frequent value of the deviation amount may be used.

The extraction unit 28D specifies a target subject 130 decided based on the time included in the first virtual viewpoint moving image 118 (in the example shown in Fig. 26, a time slot decided according to the difference degree 128). Here, the target subject 130 is an example of a "first subject" according to the technology of the present disclosure.

Examples of the time included in the first virtual viewpoint moving image 118 include a length of time in which the subject is imaged, a first and/or last time slot (for example, several seconds) or a time point in the total playback time of the first virtual viewpoint moving image 118.

In the third embodiment, the extraction unit 28D specifies the subject that is imaged for the longest time in the first specific section virtual viewpoint moving image 118A as the target subject 130 by performing the subject recognition processing of the AI method with respect to all the virtual viewpoint images 116 included in the first specific section virtual viewpoint moving image 118A acquired by the acquisition unit 28C. Then, the extraction unit 28D extracts the virtual viewpoint images 116 of the plurality of frames including the specified target subject 130 from the first specific section virtual viewpoint moving image 118A.

It should be noted that, here, although the form example is described in which the subject recognition processing of the AI method is performed, this is merely an example, and the subject recognition processing of the template matching method may be performed. In addition, an identifier (hereinafter, referred to as a "subject identifier") for specifying the subject is given in advance to the subject included in all the virtual viewpoint images 116 included in the first virtual viewpoint moving image 118, the extraction unit 28D may specify the subject included in each virtual viewpoint image 116 with reference to the subject identifier.

The selection unit 28E selects the virtual viewpoint image 116 of one frame decided based on a size of the target subject 130 in the virtual viewpoint images 116 of the plurality of frames extracted by the extraction unit 28D. For example, the selection unit 28E selects the virtual viewpoint image 116 of one frame including the target subject 130 having a maximum size from among the virtual viewpoint images 116 of the plurality of frames extracted by the extraction unit 28D. For example, in a case in which the subject recognition processing of the AI method is performed by the extraction unit 28D, the selection unit 28E specifies the virtual viewpoint image 116 including the target subject 130 having the maximum size by referring to a size of a bounding box used in the subject recognition processing of the AI method.

Here, the plurality of frames extracted by the extraction unit 28D are examples of a "plurality of frames including a first subject in the imaging region in the virtual viewpoint moving image" according to the technology of the present disclosure. In addition, the virtual viewpoint image 116 of one frame including the target subject 130 having the maximum size is an example of an "image related to a first frame" according to the technology of the present disclosure. In addition, the "maximum size" is an example of a "size of the first subject" according to the technology of the present disclosure.

It should be noted that, although the target subject 130 having the maximum size is described as an example here, this is merely an example, and the target subject 130 having a designated size other than the maximum size (for example, the next largest size after the maximum size) may be used, the target subject 130 having the maximum size within a size range decided in advance (for example, a size range decided according to an indication received by the reception device 50 or the like) may be used, or the target subject 130 having a size decided according to an indication received by the reception device 50 or the like may be used.

The processing unit 28F processes the first virtual viewpoint moving image 118 into an image having a size different from the size of the first virtual viewpoint moving image 118. Examples of the image having the size different from the size of the first virtual viewpoint moving image 118 include an image having a smaller amount of data than the first virtual viewpoint moving image 118 (for example, an image for at least one frame), an image in which the first virtual viewpoint moving image 118 is thinned out (for example, a frame-by-frame image), an image in which a display size of the virtual viewpoint image 116 for at least one frame included in the first virtual viewpoint moving image 118 is reduced, and/or an image obtained by thinning out the pixels in the virtual viewpoint image 116 for at least one frame included in the first virtual viewpoint moving image 118.

The processing unit 28F generates an image related to the virtual viewpoint image 116 of one frame among all the virtual viewpoint images 116 included in the first virtual viewpoint moving image 118. The image related to the virtual viewpoint image 116 of one frame is, for example, an image showing a content of the first virtual viewpoint moving image 118. Here, the image related to the virtual viewpoint image 116 of one frame is an example of an "image related to a first frame" according to the technology of the present disclosure. Examples of the image related to the virtual viewpoint image 116 of one frame include the entire virtual viewpoint image 116 of one frame itself, a part cut out from the virtual viewpoint image 116 of one frame, and/or an image in which the virtual viewpoint image 116 of one frame is processed.

The processing unit 28F acquires a thumbnail image 132 corresponding to the first virtual viewpoint moving image 118 based on the plurality of captured images 64 and the plurality of pieces of viewpoint information 74. In the third embodiment, the processing unit 28F acquires the thumbnail image 132 based on the difference degree 128 among the plurality of pieces of viewpoint information 74 (here, as an example, between the first viewpoint path information 112 and the second viewpoint path information 114). The thumbnail image 132 is an example of a "representative image" according to the technology of the present disclosure. That is, the processing unit 28F converts the virtual viewpoint image 116 of one representative frame among all the virtual viewpoint images 116 included in the first virtual viewpoint moving image 118 into a thumbnail.

The processing unit 28F processes, for example, the virtual viewpoint image 116 selected by the selection unit 28E into the thumbnail image 132. As the method of processing the virtual viewpoint image 116 into the thumbnail image 132, a method of processing the first virtual viewpoint moving image 118 into the image having the size different from the size of the first virtual viewpoint moving image 118 can be used. In addition, the processing unit 28F associates the first metadata (not shown), which is given to the virtual viewpoint image 116 before being converted into the thumbnail, with the thumbnail image 132. In addition, the processing unit 28F acquires the first moving image identification information 120 from the first virtual viewpoint moving image 118 including the virtual viewpoint image 116 converted into the thumbnail.

It should be noted that, in this way, the processing performed by the processor 28 with respect to the thumbnail image 132 acquired by the processing unit 28F, the first metadata associated with the thumbnail image 132, and the first moving image identification information 120 acquired by the processing unit 28F is, for example, the same as the processing performed by the processor 28 with respect to the thumbnail image 102, the metadata 92A, and the moving image identification information 96 described in the second embodiment (see Fig. 18).

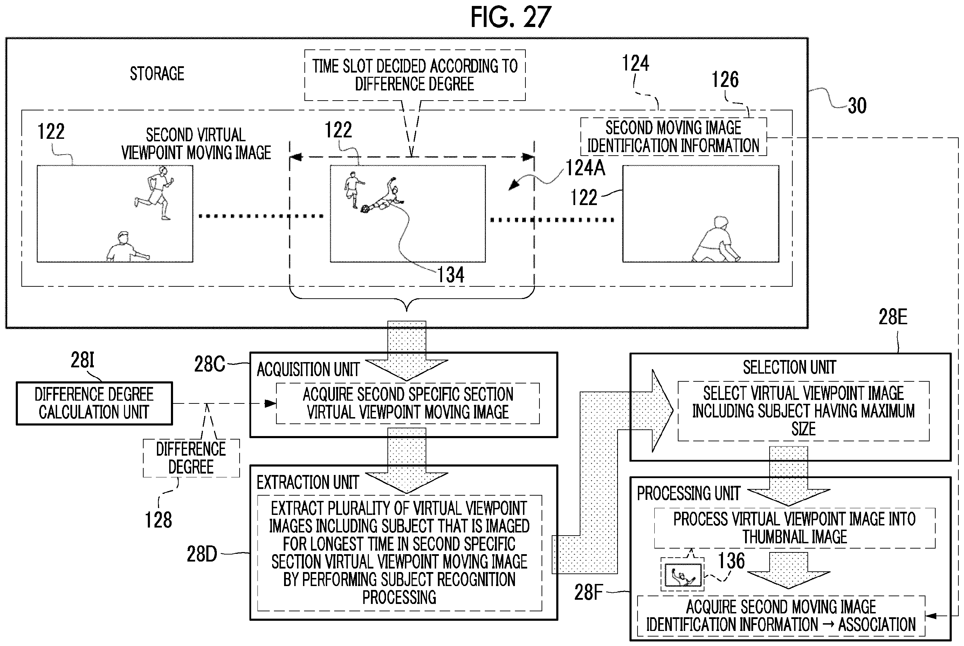

As shown in Fig. 27 as an example, the acquisition unit 28C acquires the difference degree 128 from the difference degree calculation unit 28I. The acquisition unit 28C acquires a second specific section virtual viewpoint moving image 124A from the second virtual viewpoint moving image 124 stored in the storage 30. The second specific section virtual viewpoint moving image 124A is a virtual viewpoint moving image in a time slot specified from the difference degree 128 acquired by the acquisition unit 28C in the second virtual viewpoint moving image 124. Here, the time slot specified from the difference degree 128 is, for example, a time slot corresponding to the division area 110A (see Fig. 25) with which a maximum deviation amount among a plurality of deviation amounts represented by the difference degree 128 is associated. Here, the maximum deviation amount is described as an example, but a minimum deviation amount may be used, a median value of the deviation amount may be used, or a most frequent value of the deviation amount may be used.

The extraction unit 28D specifies a target subject 134 decided based on the time included in the second virtual viewpoint moving image 124 (in the example shown in Fig. 27, a time slot decided according to the difference degree 128). Here, the target subject 134 is an example of a "first subject" according to the technology of the present disclosure.

Examples of the time included in the second virtual viewpoint moving image 124 include a length of time in which the subject is imaged, a first and/or last time slot (for example, several seconds) or a time point in the total playback time of the second virtual viewpoint moving image 124.

In the third embodiment, the extraction unit 28D specifies the subject that is imaged for the longest time in the second specific section virtual viewpoint moving image 124A as the target subject 134 by performing the subject recognition processing of the AI method with respect to all the virtual viewpoint images 122 included in the second specific section virtual viewpoint moving image 124A acquired by the acquisition unit 28C. Then, the extraction unit 28D extracts the virtual viewpoint images 122 of the plurality of frames including the specified target subject 134 from the second specific section virtual viewpoint moving image 124A.

It should be noted that, here, although the form example is described in which the subject recognition processing of the AI method is performed, this is merely an example, and the subject recognition processing of the template matching method may be performed. In addition, an identifier (hereinafter, referred to as a "subject identifier") for specifying the subject is given in advance to the subject included in all the virtual viewpoint images 122 included in the second virtual viewpoint moving image 124, the extraction unit 28D may specify the subject included in each virtual viewpoint image 122 with reference to the subject identifier.

The selection unit 28E selects the virtual viewpoint image 122 of one frame decided based on a size of the target subject 134 in the virtual viewpoint images 122 of the plurality of frames extracted by the extraction unit 28D. For example, the selection unit 28E selects the virtual viewpoint image 122 of one frame including the target subject 134 having a maximum size from among the virtual viewpoint images 122 of the plurality of frames extracted by the extraction unit 28D. For example, in a case in which the subject recognition processing of the AI method is performed by the extraction unit 28D, the selection unit 28E specifies the virtual viewpoint image 122 including the target subject 134 having the maximum size by referring to a size of a bounding box used in the subject recognition processing of the AI method.

Here, the plurality of frames extracted by the extraction unit 28D are examples of a "plurality of frames including a first subject in the imaging region in the virtual viewpoint moving image" according to the technology of the present disclosure. In addition, the virtual viewpoint image 122 of one frame including the target subject 134 having the maximum size is an example of an "image related to a first frame" according to the technology of the present disclosure. In addition, the "maximum size" is an example of a "size of the first subject" according to the technology of the present disclosure.

It should be noted that, although the target subject 134 having the maximum size is described as an example here, this is merely an example, and the target subject 134 having a designated size other than the maximum size (for example, the next largest size after the maximum size) may be used, the target subject 134 having the maximum size within a size range decided in advance (for example, a size range decided according to an indication received by the reception device 50 or the like) may be used, or the target subject 134 having a size decided according to an indication received by the reception device 50 or the like may be used.

The processing unit 28F processes the second virtual viewpoint moving image 124 into an image having a size different from the size of the second virtual viewpoint moving image 124. Examples of the image having the size different from the size of the second virtual viewpoint moving image 124 include an image having a smaller amount of data than the second virtual viewpoint moving image 124 (for example, an image for at least one frame), an image in which the second virtual viewpoint moving image 124 is thinned out (for example, a frame-by-frame image), an image in which a display size of the virtual viewpoint image 122 for at least one frame included in the second virtual viewpoint moving image 124 is reduced, and/or an image obtained by thinning out the pixels in the virtual viewpoint image 122 for at least one frame included in the second virtual viewpoint moving image 124.

The processing unit 28F generates an image related to the virtual viewpoint image 122 of one frame among all the virtual viewpoint images 122 included in the second virtual viewpoint moving image 124. The image related to the virtual viewpoint image 122 of one frame is, for example, an image showing a content of the second virtual viewpoint moving image 124. Here, the image related to the virtual viewpoint image 122 of one frame is an example of an "image related to a first frame" according to the technology of the present disclosure. Examples of the image related to the virtual viewpoint image 122 of one frame include the entire virtual viewpoint image 122 of one frame itself, a part cut out from the virtual viewpoint image 122 of one frame, and/or an image in which the virtual viewpoint image 122 of one frame is processed.

The processing unit 28F acquires a thumbnail image 136 corresponding to the second virtual viewpoint moving image 124 based on the plurality of captured images 64 and the plurality of pieces of viewpoint information 74. In the third embodiment, the processing unit 28F acquires the thumbnail image 136 based on the difference degree 128 among the plurality of pieces of viewpoint information 74 (here, as an example, between the first viewpoint path information 112 and the second viewpoint path information 114). The thumbnail image 136 is an example of a "representative image" according to the technology of the present disclosure. That is, the processing unit 28F converts the virtual viewpoint image 122 of one representative frame among all the virtual viewpoint images 122 included in the second virtual viewpoint moving image 124 into a thumbnail.

The processing unit 28F processes, for example, the virtual viewpoint image 122 selected by the selection unit 28E into the thumbnail image 136. As the method of processing the virtual viewpoint image 122 into the thumbnail image 136, a method of processing the second virtual viewpoint moving image 124 into the image having the size different from the size of the second virtual viewpoint moving image 124 can be used. In addition, the processing unit 28F associates the second metadata (not shown), which is given to the virtual viewpoint image 122 before being converted into the thumbnail, with the thumbnail image 136. In addition, the processing unit 28F acquires the second moving image identification information 126 from the second virtual viewpoint moving image 124 including the virtual viewpoint image 122 converted into the thumbnail.

It should be noted that, in this way, the processing performed by the processor 28 with respect to the thumbnail image 136 acquired by the processing unit 28F, the second metadata associated with the thumbnail image 136, and the second moving image identification information 126 acquired by the processing unit 28F is, for example, the same as the processing performed by the processor 28 with respect to the thumbnail image 102, the metadata 92A, and the moving image identification information 96 described in the second embodiment (see Fig. 18).

As described so far, in the image processing apparatus 10 according to the third embodiment, the difference degree 128 is calculated as the difference degree between the first viewpoint path 108 and the second viewpoint path 110 (for example, the difference degree between the first viewpoint path information 112 and the second viewpoint path information 114), and the thumbnail image 132 is acquired based on the calculated difference degree 128. That is, the thumbnail image 132 corresponding to the virtual viewpoint image 116 specified based on the difference degree 128 from among the plurality of virtual viewpoint images 116 included in the first virtual viewpoint moving image 118 is acquired. Also, in the image processing apparatus 10 according to the third embodiment, the thumbnail image 136 is acquired based on the difference degree 128. That is, the thumbnail image 136 corresponding to the virtual viewpoint image 122 specified based on the difference degree 128 from among the plurality of virtual viewpoint images 122 included in the second virtual viewpoint moving image 124 is acquired. Then, the list screen including the thumbnail images 132 and 136 acquired by the image processing apparatus 10 is displayed on the touch panel display 16 of the user device 12. Therefore, with the present configuration, it is possible to contribute to showing the thumbnail image 102 obtained based on the difference degree 128 calculated as the difference degree between the first viewpoint path 108 and the second viewpoint path 110 to the user 14.

It should be noted that, in the third embodiment, the form example is described in which the difference degree 128 is calculated as the difference degree between the first viewpoint path 108 and the second viewpoint path 110, and the virtual viewpoint image to be converted into the thumbnail is specified based on the calculated difference degree 128, but the technology of the present disclosure is not limited to this. The virtual viewpoint image to be converted into the thumbnail may be specified based on a difference degree between one viewpoint information 74 corresponding to one viewpoint or at least one of the plurality of pieces of viewpoint information 74 included in the first viewpoint path 108 or the second viewpoint path 110.

In addition, in the third embodiment, the difference degree 128 is calculated as the difference degree between the two viewpoint paths, which are the first viewpoint path 108 and the second viewpoint path 110, but the technology of the present disclosure is not limited to this, and a difference degree between three or more viewpoint paths may be calculated. In this case, the thumbnail image corresponding to at least one virtual viewpoint image included in the virtual viewpoint moving image corresponding to at least one viewpoint path among the three or more viewpoint paths need only be generated.

### [Fourth embodiment]

In the fourth embodiment, the components as described in the first to third embodiments will be designated by the same reference numeral, the description thereof will be omitted, and a difference from the first to third embodiments will be described.

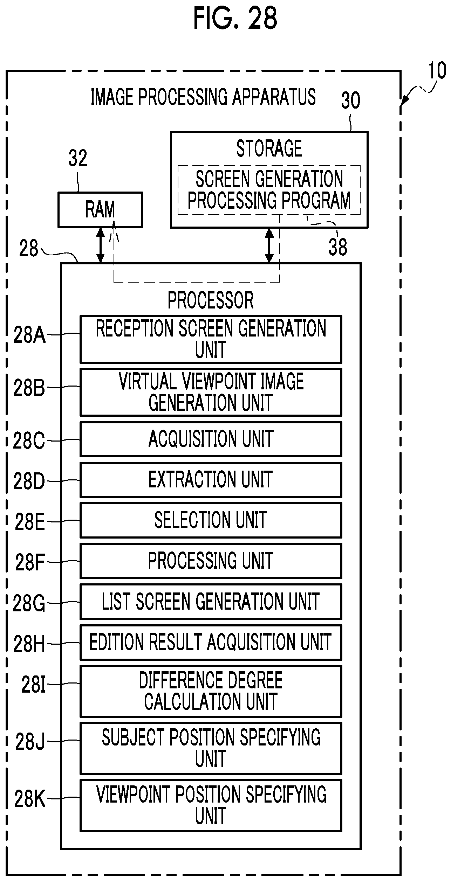

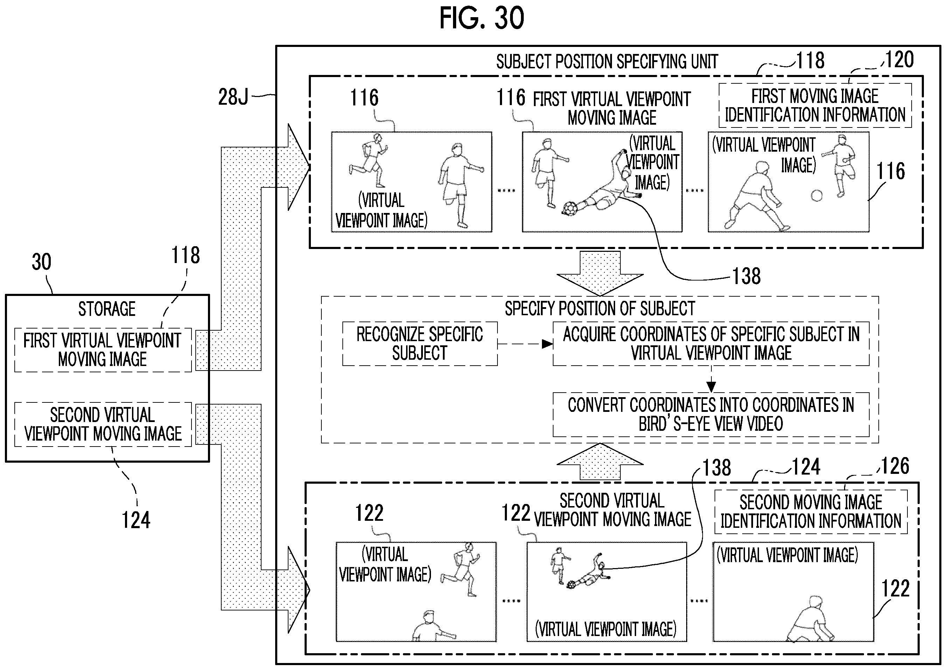

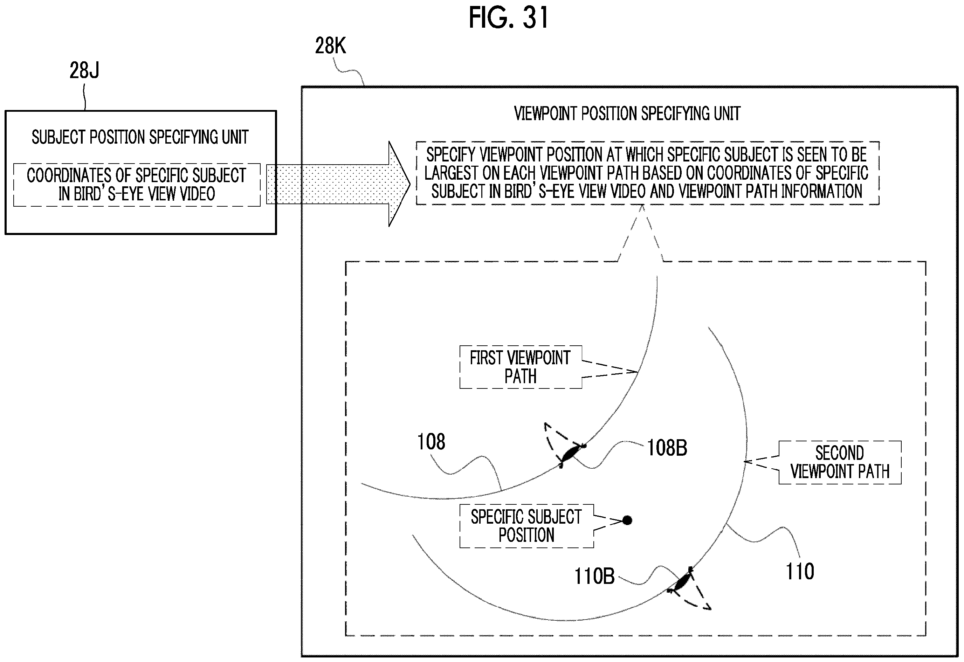

As shown in Fig. 28 as an example, the processor 28 of the image processing apparatus 10 according to the fourth embodiment is different from the processor 28 shown in Fig. 19 in that the processor 28 of the image processing apparatus 10 according to the fourth embodiment executes the screen generation processing program 38 to be further operated as a subject position specifying unit 28J and a viewpoint position specifying unit 28K. The processor 28 is operated as the virtual viewpoint moving image generation unit 28B, the acquisition unit 28C, the processing unit 28F, the subject position specifying unit 28J, and the viewpoint position specifying unit 28K to acquire a thumbnail image based on a positional relationship among the plurality of viewpoint paths. The positional relationship refers to a positional relationship (see Fig. 31) among the plurality of viewpoint paths with respect to a specific subject 138 (see Fig. 30). Here, the specific subject 138 is an example of a "second subject" according to the technology of the present disclosure.

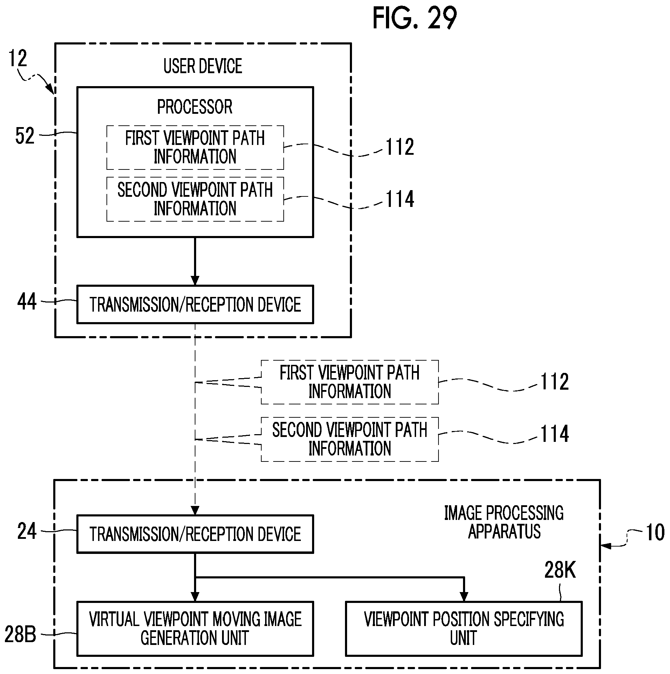

As shown in Fig. 29 as an example, the processor 52 of the user device 12 transmits the first viewpoint path information 112 and the second viewpoint path information 114 to the image processing apparatus 10 via the transmission/reception device 44. In the image processing apparatus 10, the transmission/reception device 24 receives the first viewpoint path information 112 and the second viewpoint path information 114 transmitted from the transmission/reception device 44. The virtual viewpoint moving image generation unit 28B and the viewpoint position specifying unit 28K acquire the first viewpoint path information 112 and the second viewpoint path information 114 received by the transmission/reception device 24.

As an example, as shown in Fig. 30, the first virtual viewpoint moving image 118 and the second virtual viewpoint moving image 124 are stored in the storage 30 as in the third embodiment. The subject position specifying unit 28J acquires the first virtual viewpoint moving image 118 from the storage 30. The subject position specifying unit 28J recognizes the specific subject 138 included in the first virtual viewpoint moving image 118 by performing the subject recognition processing of the AI method with respect to the first virtual viewpoint moving image 118. Here, the specific subject 138 refers to, for example, a subject designated in advance by the user 14 or the like. The subject position specifying unit 28J acquires as information for specifying a position in the virtual viewpoint image 116 of the specific subject 138 included in the virtual viewpoint image 116 coordinates of the specific subject 138 in the virtual viewpoint image 116 including the specific subject 138 (hereinafter, also referred to as "first image-inside coordinates"). The subject position specifying unit 28J converts the first image-inside coordinates into coordinates for specifying the corresponding position in the bird's-eye view video 72 (see Fig. 4) (hereinafter, also referred to as "first bird's-eye view video-inside coordinates").

In addition, the subject position specifying unit 28J acquires the second virtual viewpoint moving image 124 from the storage 30. The subject position specifying unit 28J recognizes the specific subject 138 included in the second virtual viewpoint moving image 124 by performing the subject recognition processing of the AI method with respect to the second virtual viewpoint moving image 124. The subject position specifying unit 28J acquires as information for specifying a position in the virtual viewpoint image 122 of the specific subject 138 included in the virtual viewpoint image 122 coordinates of the specific subject 138 in the virtual viewpoint image 122 including the specific subject 138 (hereinafter, also referred to as "second image-inside coordinates"). The subject position specifying unit 28J converts the second image-inside coordinates into coordinates for specifying the corresponding position in the bird's-eye view video 72 (see Fig. 4) (hereinafter, also referred to as "second bird's-eye view video-inside coordinates").

As shown in Fig. 31 as an example, the viewpoint position specifying unit 28K acquires the first bird's-eye view video-inside coordinates obtained by the subject position specifying unit 28J as the coordinates of the specific subject 138 in the bird's-eye view video 72. The viewpoint position specifying unit 28K specifies a viewpoint position 108B at which the specific subject 138 is seen to be the largest from among the plurality of viewpoint positions included in the first viewpoint path 108 based on the first bird's-eye view video-inside coordinates and the first viewpoint path information 112 (see Fig. 21). Then, the viewpoint position specifying unit 28K acquires the viewpoint information 74 corresponding to the specified viewpoint position 108B from the first viewpoint path information 112.

In addition, the viewpoint position specifying unit 28K acquires the second bird's-eye view video-inside coordinates obtained by the subject position specifying unit 28J as the coordinates of the specific subject 138 in the bird's-eye view video 72. The viewpoint position specifying unit 28K specifies a viewpoint position 110B at which the specific subject 138 is seen to be the largest from among the plurality of viewpoint positions included in the second viewpoint path 110 based on the second bird's-eye view video-inside coordinates and the second viewpoint path information 114 (see Fig. 21). Then, the viewpoint position specifying unit 28K acquires the viewpoint information 74 corresponding to the specified viewpoint position 110B from the second viewpoint path information 114.

The viewpoint information 74 acquired from the first viewpoint path information 112 by the viewpoint position specifying unit 28K and the viewpoint information 74 acquired from the second viewpoint path information 114 by the viewpoint position specifying unit 28K are results of the specification by the viewpoint position specifying unit 28K. Hereinafter, for convenience of description, the viewpoint information 74 acquired from the first viewpoint path information 112 by the viewpoint position specifying unit 28K will also be referred to as a "first specification result", and the viewpoint information 74 acquired from the second viewpoint path information 114 by the viewpoint position specifying unit 28K will also be referred to as a "second specification result".

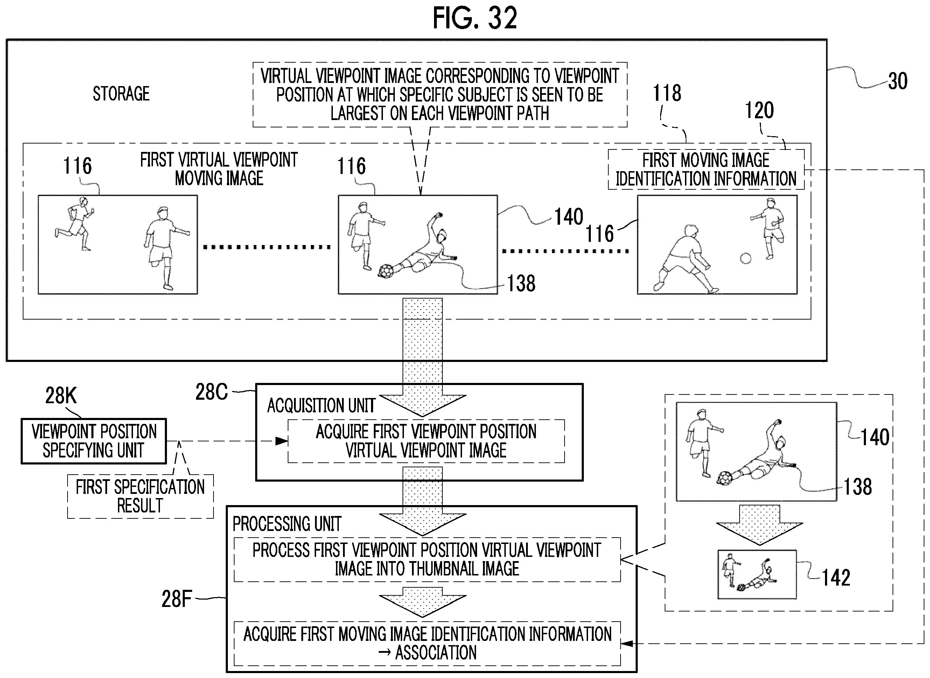

As shown in Fig. 32 as an example, the acquisition unit 28C acquires the first specification result from the viewpoint position specifying unit 28K. The acquisition unit 28C acquires the virtual viewpoint image 116 corresponding to the first specification result as a first viewpoint position virtual viewpoint image 140 from the first virtual viewpoint moving image 118 stored in the storage 30. The first viewpoint position virtual viewpoint image 140 is the virtual viewpoint image 116 corresponding to the viewpoint position 108B at which the specific subject 138 is seen to be the largest on the first viewpoint path 108 (see Fig. 31), that is, the virtual viewpoint image 116 generated according to the viewpoint information 74 corresponding to the viewpoint position 108B.

The processing unit 28F converts the first viewpoint position virtual viewpoint image 140 acquired by the acquisition unit 28C into the thumbnail. That is, the processing unit 28F processes the first viewpoint position virtual viewpoint image 140 into a thumbnail image 142. In addition, the processing unit 28F associates the first metadata (not shown), which is given to the first viewpoint position virtual viewpoint image 140 before being converted into the thumbnail, with the thumbnail image 142. In addition, the processing unit 28F acquires the first moving image identification information 120 from the first virtual viewpoint moving image 118 including the first viewpoint position virtual viewpoint image 140 converted into the thumbnail.

It should be noted that, in this way, the processing performed by the processor 28 with respect to the thumbnail image 142 acquired by the processing unit 28F, the first metadata associated with the thumbnail image 142, and the first moving image identification information 120 acquired by the processing unit 28F is, for example, the same as the processing performed by the processor 28 with respect to the thumbnail image 102, the metadata 92A, and the moving image identification information 96 described in the second embodiment (see Fig. 18).

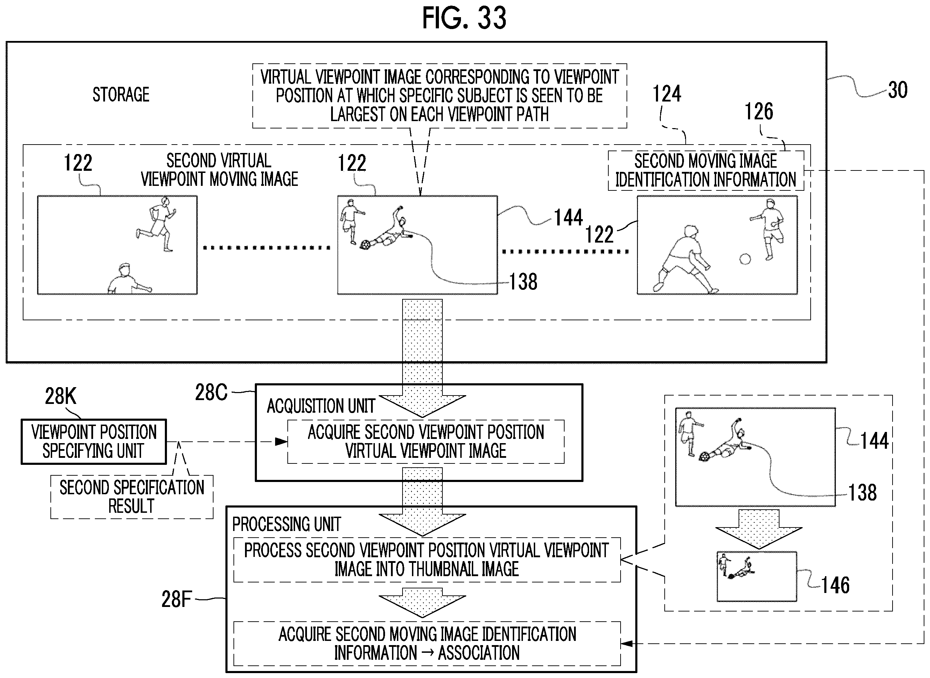

As shown in Fig. 33 as an example, the acquisition unit 28C acquires the second specification result from the viewpoint position specifying unit 28K. The acquisition unit 28C acquires the virtual viewpoint image 122 corresponding to the second specification result as a second viewpoint position virtual viewpoint image 144 from the second virtual viewpoint moving image 124 stored in the storage 30. The second viewpoint position virtual viewpoint image 144 is the virtual viewpoint image 122 corresponding to the viewpoint position 110B at which the specific subject 138 is seen to be the largest on the second viewpoint path 110 (see Fig. 31), that is, the virtual viewpoint image 116 generated according to the viewpoint information 74 corresponding to the viewpoint position 110B.

The processing unit 28F converts the second viewpoint position virtual viewpoint image 144 acquired by the acquisition unit 28C into the thumbnail. That is, the processing unit 28F processes the second viewpoint position virtual viewpoint image 144 into a thumbnail image 146. In addition, the processing unit 28F associates the second metadata (not shown), which is given to the second viewpoint position virtual viewpoint image 144 before being converted into the thumbnail, with the thumbnail image 146. In addition, the processing unit 28F acquires the second moving image identification information 126 from the second virtual viewpoint moving image 124 including the second viewpoint position virtual viewpoint image 144 converted into the thumbnail.

It should be noted that, in this way, the processing performed by the processor 28 with respect to the thumbnail image 146 acquired by the processing unit 28F, the second metadata associated with the thumbnail image 146, and the second moving image identification information 126 acquired by the processing unit 28F is, for example, the same as the processing performed by the processor 28 with respect to the thumbnail image 102, the metadata 92A, and the moving image identification information 96 described in the second embodiment (see Fig. 18).

As described so far, in the image processing apparatus 10 according to the fourth embodiment, the thumbnail images 142 and 146 are acquired based on the positional relationship between the first viewpoint path 108 and the second viewpoint path 110. For example, among all the virtual viewpoint images 116 included in the first virtual viewpoint moving image 118, the thumbnail image 142 of the first viewpoint position virtual viewpoint image 140 corresponding to the viewpoint position 108B at which the specific subject 138 is seen to be the largest on the first viewpoint path 108 is obtained. In addition, among all the virtual viewpoint images 122 included in the second virtual viewpoint moving image 124, the thumbnail image 146 of the second viewpoint position virtual viewpoint image 144 corresponding to the viewpoint position 110B at which the specific subject 138 is seen to be the largest on the second viewpoint path 110 is obtained. Then, the list screen including the thumbnail images 142 and 146 acquired by the image processing apparatus 10 is displayed on the touch panel display 16 of the user device 12. Therefore, with the present configuration, it is possible to contribute to showing the thumbnail images 142 and 146 obtained based on the positional relationship between the first viewpoint path 108 and the second viewpoint path 110 to the user 14.

In addition, in the image processing apparatus 10 according to the fourth embodiment, the thumbnail images 142 and 146 are acquired based on the positional relationship between the first viewpoint path 108 and the second viewpoint path 110 with respect to the specific subject 138. Therefore, with the present configuration, it is possible to contribute to showing the thumbnail images 142 and 146 obtained based on the positional relationship between the first viewpoint path 108 and the second viewpoint path 110 with respect to the specific subject 138 to the user 14.

It should be noted that, in the fourth embodiment, the viewpoint position 108B at which the specific subj ect 138 is seen to be the largest on the first viewpoint path 108 and the viewpoint position 110B at which the specific subject 138 is seen to be the largest on the second viewpoint path 110 are described as examples, but the technology of the present disclosure is not limited to this, and for example, a viewpoint position at which the specific subject 138 is seen to be the largest within the size range decided in advance by the user 14 or the like on the first viewpoint path 108 and a viewpoint position at which the specific subject 138 is seen to be the largest within the size range decided in advance by the user 14 or the like on the second viewpoint path 110 may be applied.

In addition, in the fourth embodiment, two viewpoint paths, which are the first viewpoint path 108 and the second viewpoint path 110, are described as examples, but the technology of the present disclosure is not limited to this, and the virtual viewpoint image to be converted into the thumbnail may be specified based on a positional relationship between three or more viewpoint paths.

### [Fifth Embodiment]

In the fifth embodiment, the components as described in the first to fourth embodiments will be designated by the same reference numeral, the description thereof will be omitted, and a difference from the first to fourth embodiments will be described.

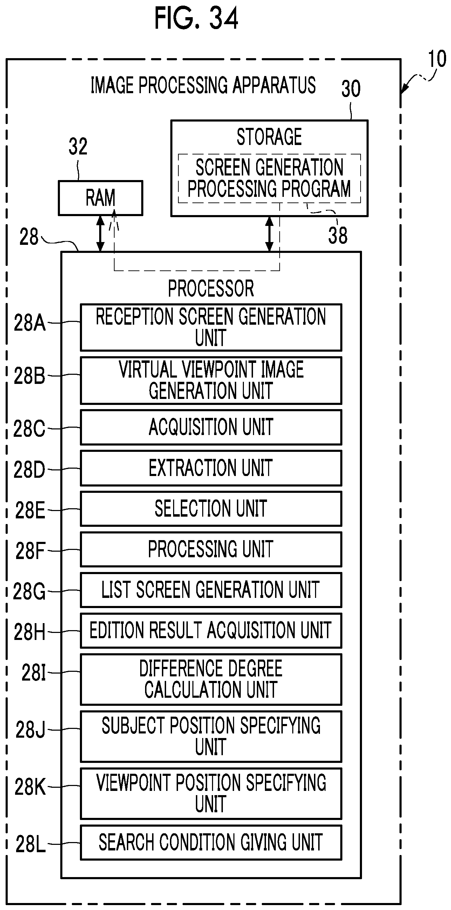

As shown in Fig. 34 as an example, the processor 28 of the image processing apparatus 10 according to the fifth embodiment is different from the processor 28 shown in Fig. 28 in that the processor 28 of the image processing apparatus 10 according to the fifth embodiment executes the screen generation processing program 38 to be further operated as a search condition giving unit 28L.

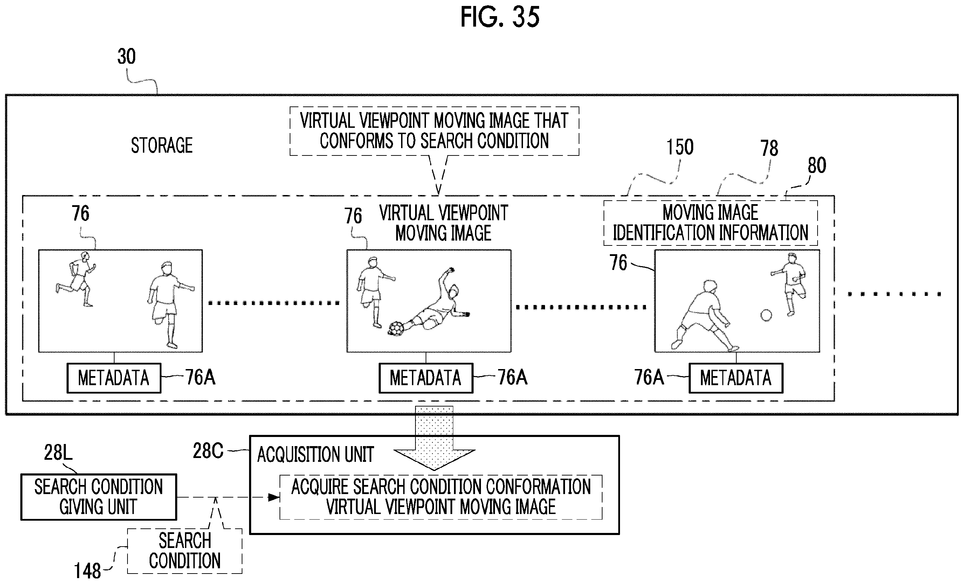

As shown in Fig. 35 as an example, a plurality of virtual viewpoint moving images 78 are stored in the storage 30. The search condition giving unit 28L gives a search condition 148 to the acquisition unit 28C. The search condition 148 refers to a condition for searching the plurality of virtual viewpoint moving images 78 for the virtual viewpoint moving image including the virtual viewpoint image 76 to be converted into the thumbnail. Examples of the search condition 148 include various types of information included in the metadata 76A (for example, the time point at which the virtual viewpoint image 76 is generated) and/or the moving image identification information 80. The search condition 148 is decided according to an indication received by the reception device 50 or the like and/or various conditions (for example, the imaging condition). The search condition 148 initially decided may be fixed, or may be changed according to an indication received by the reception device 50 or the like and/or various conditions (for example, the imaging condition).

The acquisition unit 28C searches the plurality of virtual viewpoint moving images 78 stored in the storage 30 for a search condition conformation virtual viewpoint moving image 150, which is the virtual viewpoint moving image 78 that conforms to the search condition 148 given by the search condition giving unit 28L. Here, the meaning of "conformation" also includes a meaning of a match within an allowable error in addition to an exact match with the search condition 148. In the image processing apparatus 10 according to the fifth embodiment, the processing by the processor 28 described in the first to fourth embodiments is performed with respect to the search condition conformation virtual viewpoint moving image 150 obtained by being searched by the acquisition unit 28C.

As described above, in the image processing apparatus 10 according to the fifth embodiment, the search condition conformation virtual viewpoint moving image 150 that conforms to the given search condition 148 is searched from the plurality of virtual viewpoint moving images 78, and the thumbnail image described in the first to fifth embodiments is acquired based on the search condition conformation virtual viewpoint moving image 150 obtained by the search. Therefore, with the present configuration, it is possible to contribute to showing the thumbnail image obtained based on the virtual viewpoint moving image 78 that conforms to the given search condition to the user 14.

As a modification example of the fifth embodiment, for example, in a case in which the plurality of thumbnail images, which are generated by any method and are respectively associated with the moving images, are displayed in a list on the display, in a case in which the search condition 148 is input by the user 14, the thumbnail image associated with the search condition conformation virtual viewpoint moving image 150 may be changed according to the input search condition. For example, in a case in which the user 14 inputs a specific person (for example, a name of the specific person) as the search condition, the thumbnail image associated with the search condition conformation virtual viewpoint moving image 150 in which the specific person input as the search condition is imaged is changed to the thumbnail image of the specific person, and is displayed. In this case, for example, in the search condition conformation virtual viewpoint moving image 150, a frame in which the specific person is imaged to be the largest is used as the changed thumbnail image. As a result, the user 14 can confirm in a list how the specific person input as the search condition is imaged in each of the moving images.

### [Sixth Embodiment]

In the sixth embodiment, the components as described in the first to fifth embodiments will be designated by the same reference numeral, the description thereof will be omitted, and a difference from the first to fifth embodiments will be described.

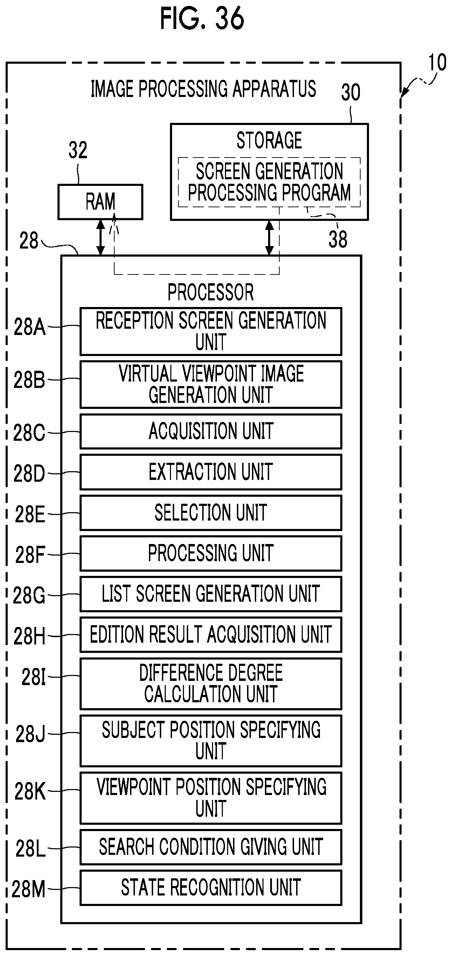

As shown in Fig. 36 as an example, the processor 28 of the image processing apparatus 10 according to the sixth embodiment is different from the processor 28 shown in Fig. 34 in that the processor 28 of the image processing apparatus 10 according to the sixth embodiment executes the screen generation processing program 38 to be further operated as a state recognition unit 28M.

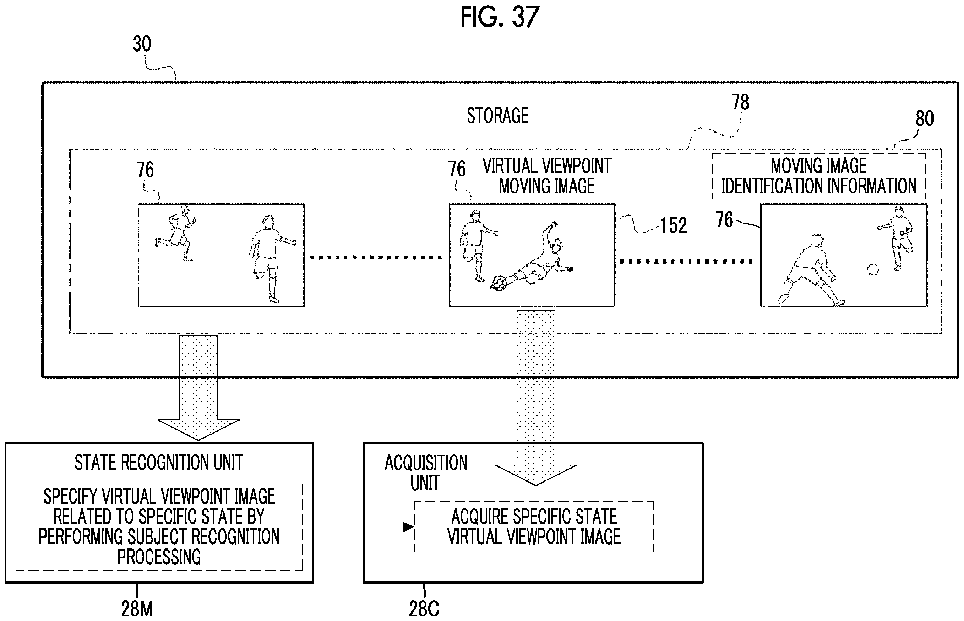

As shown in Fig. 37 as an example, the state recognition unit 28M specifies the virtual viewpoint image 76 related to a specific state by performing the subject recognition processing of the AI method with respect to the plurality of virtual viewpoint images 76 (for example, the plurality of virtual viewpoint images 76 included in the designated time slot and/or all the virtual viewpoint images 76 included in the virtual viewpoint moving image 78) included in the virtual viewpoint moving image 78 stored in the storage 30. Here, examples of the specific state include a state in which the person subjects equal to or more than a predetermined number of person subjects are present per unit area, a state in which a soccer ball and a plurality of person subjects are present in a penalty area in a soccer field, a state in which the plurality of person subjects surround a person subject holding a ball, and/or a state in which the soccer ball is touching a fingertip of a goalkeeper. It should be noted that the person subject present in the soccer field is an example of a "third subject" according to the technology of the present disclosure, and the specific state is an example of a "state of the third subject" according to the technology of the present disclosure.

The acquisition unit 28C acquires the virtual viewpoint image 76 specified by the state recognition unit 28M from the virtual viewpoint moving image 78 as a specific state virtual viewpoint image 152. In the image processing apparatus 10 according to the sixth embodiment, the processing by the processor 28 described in the first to fifth embodiments is performed with respect to the specific state virtual viewpoint image 152 acquired by the acquisition unit 28C.

As described above, in the image processing apparatus 10 according to the sixth embodiment, the virtual viewpoint image 76 decided according to the specific state is converted into the thumbnail. That is, the specific state virtual viewpoint image 152 specified by the state recognition unit 28M is acquired by the acquisition unit 28C to generate the thumbnail image corresponding to the specific state virtual viewpoint image 152. Therefore, with the present configuration, it is possible to show the thumbnail image decided according to the specific state to the user 14.

### [Seventh Embodiment]

In the seventh embodiment, the components as described in the first to sixth embodiments will be designated by the same reference numeral, the description thereof will be omitted, and a difference from the first to sixth embodiments will be described.

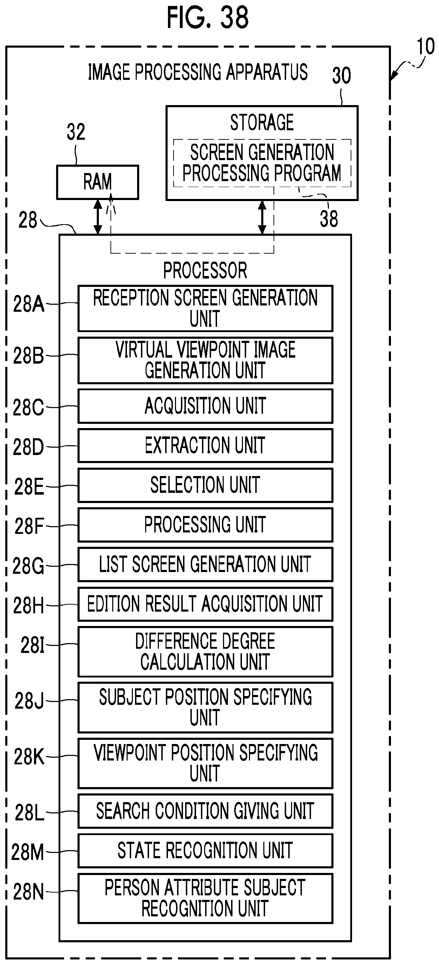

As shown in Fig. 38 as an example, the processor 28 of the image processing apparatus 10 according to the seventh embodiment is different from the processor 28 shown in Fig. 36 in that the processor 28 of the image processing apparatus 10 according to the seventh embodiment executes the screen generation processing program 38 to be further operated as a person attribute subject recognition unit 28N.

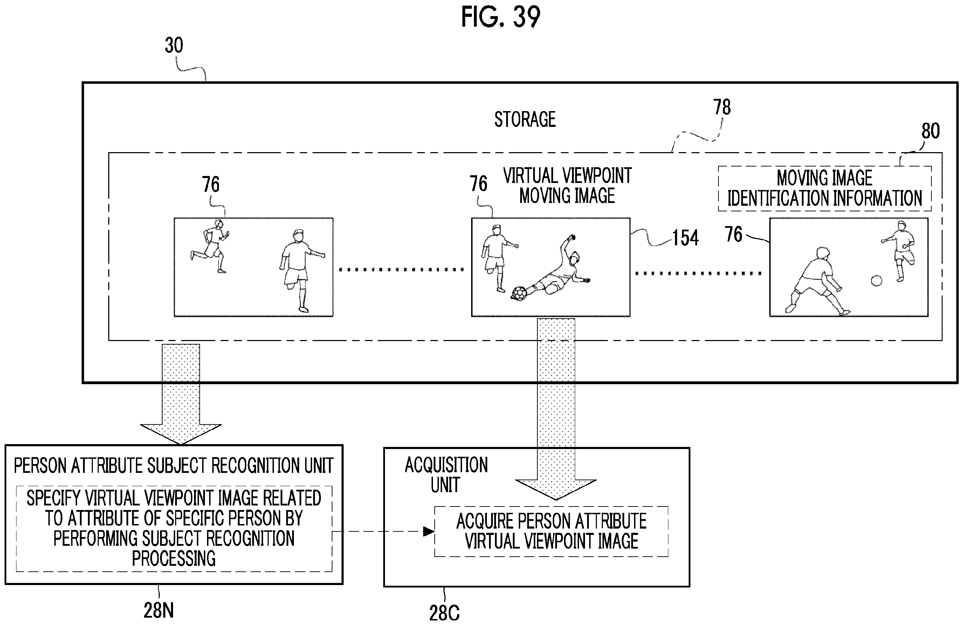

As shown in Fig. 39 as an example, the person attribute subject recognition unit 28N specifies the virtual viewpoint image 76 related to an attribute of a specific person by performing the subject recognition processing of the AI method with respect to the plurality of virtual viewpoint images 76 (for example, the plurality of virtual viewpoint images 76 included in the designated time slot and/or all the virtual viewpoint images 76 included in the virtual viewpoint moving image 78) included in the virtual viewpoint moving image 78 stored in the storage 30. Here, the specific person refers to, for example, a person who is involved in the virtual viewpoint moving image 78, such as a person who views the virtual viewpoint moving image 78 and/or a person who is involved in the production of the virtual viewpoint moving image 78. Examples of the attribute include gender, age, an address, an occupation, a race, and/or a charge state.

The person attribute subject recognition unit 28N specifies the virtual viewpoint image 76 related to the attribute of the specific person by performing the subject recognition processing according to each attribute of the specific person. In this case, for example, first, the person attribute subject recognition unit 28N derives subject specification information corresponding to the type and the attribute of the specific person given from the outside (for example, the user device 12 or the like) from a derivation table (not shown) in which the type and the attribute of the specific person are used as input and the subject specification information for specifying the subject included in the virtual viewpoint moving image 78 is used as output. Then, the person attribute subject recognition unit 28N specifies the virtual viewpoint image 76 including the subject specified from the subject specification information derived from the derivation table by performing the subject recognition processing with respect to the virtual viewpoint moving image 78.

The acquisition unit 28C acquires the virtual viewpoint image 76 specified by the person attribute subject recognition unit 28N from the virtual viewpoint moving image 78 as a person attribute virtual viewpoint image 154. In the image processing apparatus 10 according to the seventh embodiment, the processing by the processor 28 described in the first to sixth embodiments is performed with respect to the person attribute virtual viewpoint image 154 acquired by the acquisition unit 28C.

As described above, in the image processing apparatus 10 according to the seventh embodiment, the virtual viewpoint image 76 decided according to the attribute of the person involved in the virtual viewpoint moving image 78 is converted into the thumbnail. That is, the person attribute virtual viewpoint image 154 specified by the person attribute subject recognition unit 28N is acquired by the acquisition unit 28C to generate the thumbnail image corresponding to the person attribute virtual viewpoint image 154. Therefore, with the present configuration, it is possible to show the thumbnail image decided according to the attribute of the person involved in the virtual viewpoint moving image 78 to the user 14.

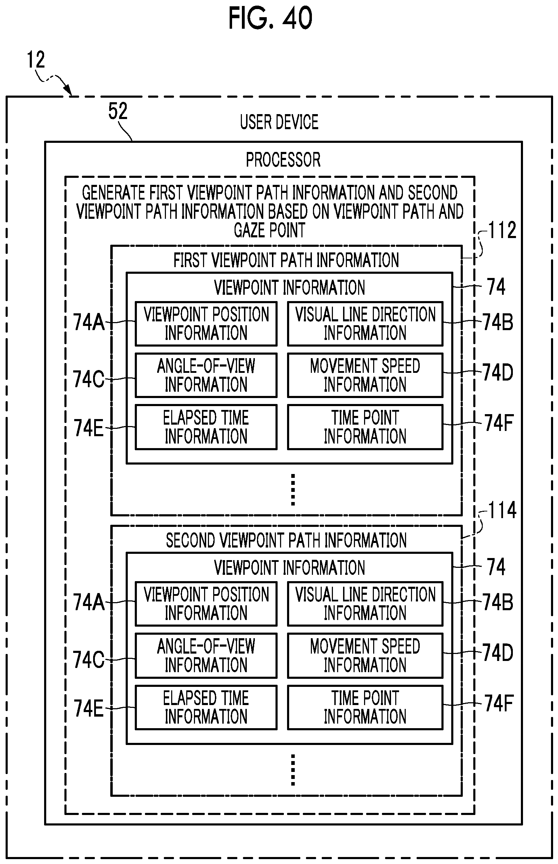

It should be noted that, in each of the embodiments described above, the form example is described in which the viewpoint position information 74A, the visual line direction information 74B, the angle-of-view information 74C, the movement speed information 74D, and the elapsed time information 74E are included in each of the plurality of pieces of viewpoint information 74 having the viewpoints different from each other, but the technology of the present disclosure is not limited to this, and the plurality of pieces of viewpoint information 74 having the viewpoints different from each other may include information related to time points different from each other. For example, as shown in Fig. 40, the plurality of pieces of viewpoint information 74 included in the first viewpoint path information 112 may include time point information 74F, which is information related to time points different from each other, and the plurality of pieces of viewpoint information 74 included in the second viewpoint path information 114 may also include the time point information 74F, which is information related to time points different from each other. As a result, it is possible to contribute to showing the image obtained based on the viewpoints different from each other and the time points different from each other to the user 14 as the thumbnail image corresponding to the virtual viewpoint moving image 78.

In addition, in each of the embodiments described above, the still image in which the virtual viewpoint image of one frame is converted into the thumbnail is described as an example of the thumbnail image, but the technology of the present disclosure is not limited to this, and a moving image obtained by converting the virtual viewpoint images of the plurality of frames into the thumbnails may be applied. In this case, the moving image may be generated based on the plurality of thumbnail images obtained by converting, into the thumbnail, a standard virtual viewpoint image specified as the virtual viewpoint image to be converted into the thumbnail from the virtual viewpoint moving image in the same manner as described in each of the embodiments described above, and the virtual viewpoint image of at least one frame that is temporally before and/or after the standard virtual viewpoint image. In a case in which a plurality of standard virtual viewpoint images converted into the thumbnails are displayed in a list on the display and the user 14 moves a cursor on any of the standard virtual viewpoint images by the mouse operation, the moving image corresponding to the standard virtual viewpoint image to which the cursor is moved may be played back.

It should be noted that the method of acquiring the representative image based on the plurality of captured images and the plurality of pieces of viewpoint information is not limited to the method described above. As long as the representative image is acquired by using the plurality of captured images 64 and the plurality of pieces of viewpoint information 74, the representative image may be decided by any method. In addition, as described above, the representative image is, for example, the image displayed on the list screen.

In addition, in each of the embodiments described above, the form example is described in which the screen generation processing is executed by the computer 22 of the image processing apparatus 10, but the technology of the present disclosure is not limited to this. The screen generation processing may be executed by the computer 40 of the user device 12, or the distributed processing may be performed by the computer 22 of the image processing apparatus 10 and the computer 40 of the user device 12.

In addition, in each of the embodiments described above, the computer 22 is described as an example, but the technology of the present disclosure is not limited to this. For example, instead of the computer 22, a device including an ASIC, an FPGA, and/or a PLD may be applied. Moreover, instead of the computer 22, a hardware configuration and a software configuration may be used in combination. The same applies to the computer 40 of the user device 12.

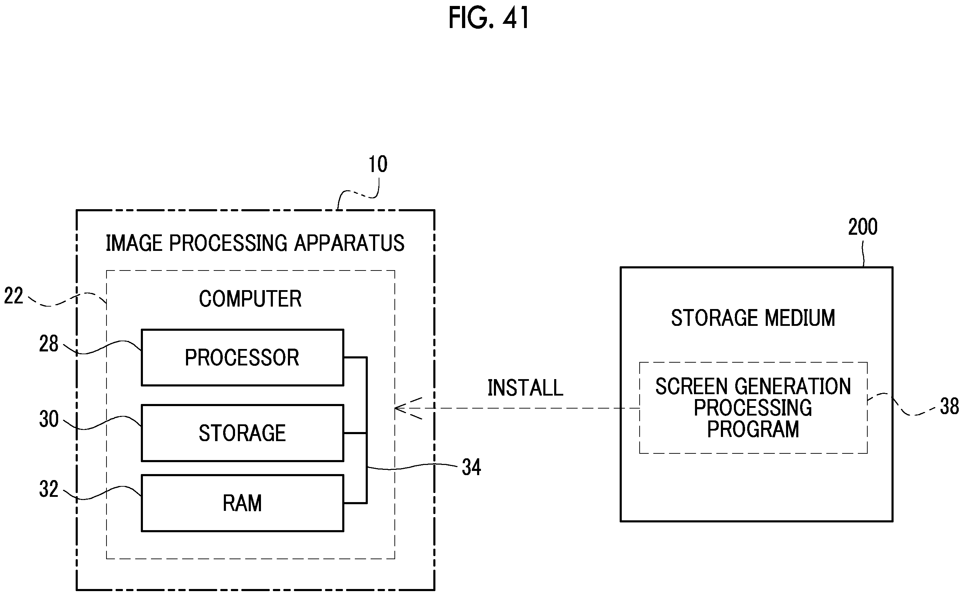

In addition, in the example described above, the screen generation processing program 38 is stored in the storage 30, but the technology of the present disclosure is not limited to this, and as shown in Fig. 41 as an example, the screen generation processing program 38 may be stored in any portable storage medium 200, such as an SSD or a USB memory, which is a non-transitorily storage medium. In this case, by installing the screen generation processing program 38 stored in the storage medium 200 in the computer 22, and the processor 28 executes the screen generation processing according to the screen generation processing program 38.

In addition, the screen generation processing program 38 may be stored in a memory of another computer, a server device, or the like connected to the computer 22 via a communication network (not shown), and the screen generation processing program 38 may be downloaded to the image processing apparatus 10 in response to a request from the image processing apparatus 10. In this case, the screen generation processing is executed by the processor 28 of the computer 22 according to the downloaded screen generation processing program 38.

In addition, although the processor 28 is described as an example in the examples described above, at least one CPU, at least one GPU, and/or at least one TPU may be used instead of the processor 28 or together with the processor 28.

The following various processors can be used as a hardware resource for executing the screen generation processing. As described above, examples of the processor include the CPU, which is a general-purpose processor that functions as the hardware resource for executing the screen generation processing according to software, that is, the program. In addition, another example of the processor includes a dedicated electric circuit which is a processor having a circuit configuration specially designed for executing the dedicated processing, such as the FPGA, the PLD, or the ASIC. The memory is built in or connected to any processor, and any processor executes the screen generation processing by using the memory.

The hardware resource for executing the screen generation processing may be configured by one of these various processors, or may be configured by a combination (for example, a combination of a plurality of FPGAs or a combination of the CPU and the FPGA) of two or more processors of the same type or different types. In addition, the hardware resource for executing the screen generation processing may be one processor.

A first example in which the hardware resource is configured by one processor is a form in which one processor is configured by a combination of one or more CPUs and software, and the processor functions as the hardware resource for executing the screen generation processing, as represented by a computer, such as a client and a server. A second example thereof is a form in which a processor that realizes the functions of the entire system including a plurality of hardware resources for executing the screen generation processing with one IC chip is used, as represented by SoC. As described above, the screen generation processing is realized by using one or more of the various processors as the hardware resources.

Further, as the hardware structures of these various processors, more specifically, an electric circuit in which circuit elements, such as semiconductor elements, are combined can be used.

Also, the screen generation processing described above is merely an example. Therefore, it is needless to say that unnecessary steps may be deleted, new steps may be added, or the processing order may be changed within a range that does not deviate from the gist.

The described contents and the shown contents are the detailed description of the parts according to the technology of the present disclosure, and are merely examples of the technology of the present disclosure. For example, the description of the configuration, the function, the action, and the effect are the description of examples of the configuration, the function, the action, and the effect of the parts according to the technology of the present disclosure. Accordingly, it is needless to say that unnecessary parts may be deleted, new elements may be added, or replacements may be made with respect to the described contents and the shown contents within a range that does not deviate from the gist of the technology of the present disclosure. In addition, in order to avoid complications and facilitate understanding of the parts according to the technology of the present disclosure, the description of common technical knowledge or the like, which does not particularly require the description for enabling the implementation of the technology of the present disclosure, is omitted in the described contents and the shown contents.

In the present specification, "A and/or B" is synonymous with "at least one of A or B". That is, "A and/or B" means that it may be only A, only B, or a combination of A and B. In addition, in the present specification, in a case in which three or more matters are associated and expressed by "and/or", the same concept as "A and/or B" is applied.

All documents, patent applications, and technical standards described in the present specification are incorporated into the present specification by reference to the same extent as in a case in which the individual documents, patent applications, and technical standards are specifically and individually stated to be described by reference.

## Claims

1. An image processing apparatus comprising:
a processor; and
a memory connected to or built in the processor,
wherein the processor
acquires a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and
outputs data for displaying the representative image on a display in a size different from the virtual viewpoint moving image.

2. The image processing apparatus according to claim 1,
wherein the representative image is an image related to a first frame among a plurality of frames including a first subject in the imaging region in the virtual viewpoint moving image.

3. The image processing apparatus according to claim 2,
wherein the first subject is a subject decided based on a time included in the virtual viewpoint moving image.

4. The image processing apparatus according to claim 2 or 3,
wherein the first frame is a frame decided based on a size of the first subject in the virtual viewpoint moving image.

5. The image processing apparatus according to any one of claims 1 to 4,
wherein the processor acquires the representative image based on an edition result of the plurality of pieces of viewpoint information.

6. The image processing apparatus according to claim 5,
wherein the plurality of pieces of viewpoint information include a plurality of viewpoint paths, and
the edition result includes a result of edition performed with respect to the plurality of viewpoint paths.

7. The image processing apparatus according to any one of claims 1 to 6,
wherein the processor acquires the representative image based on a difference degree among the plurality of pieces of viewpoint information.

8. The image processing apparatus according to claim 7,
wherein the plurality of pieces of viewpoint information include a plurality of viewpoint paths, and
the difference degree is a difference degree among the plurality of viewpoint paths.

9. The image processing apparatus according to any one of claims 1 to 8,
wherein the plurality of pieces of viewpoint information include a plurality of viewpoint paths, and
the processor acquires the representative image based on a positional relationship among the plurality of viewpoint paths.

10. The image processing apparatus according to claim 9,
wherein the positional relationship is a positional relationship among the plurality of viewpoint paths with respect to a second subject in the imaging region.

11. The image processing apparatus according to any one of claims 1 to 10,
wherein the processor
searches a plurality of the virtual viewpoint moving images for a search condition conformation virtual viewpoint moving image that conforms to a given search condition, and
acquires the representative image based on the search condition conformation virtual viewpoint moving image.

12. The image processing apparatus according to any one of claims 1 to 11,
wherein the representative image is an image decided according to a state of a third subject in the imaging region.

13. The image processing apparatus according to any one of claims 1 to 12,
wherein the representative image is an image decided according to an attribute of a person involved in the virtual viewpoint moving image.

14. The image processing apparatus according to any one of claims 1 to 13,
wherein the representative image is an image showing a content of the virtual viewpoint moving image.

15. The image processing apparatus according to any one of claims 1 to 14,
wherein the plurality of pieces of viewpoint information include first viewpoint information and second viewpoint information which have different viewpoints, and
the first viewpoint information and the second viewpoint information include information related to different time points.

16. The image processing apparatus according to any one of claims 1 to 15,
wherein the processor
outputs first data for displaying the representative image on a first display, and
outputs second data for displaying the virtual viewpoint moving image corresponding to the representative image on at least one of the first display or a second display according to selection of the representative image displayed on the first display.

17. The image processing apparatus according to any one of claims 1 to 16,
wherein the processor stores the representative image and the virtual viewpoint moving image in a state of being associated with each other in the memory.

18. An image processing apparatus comprising:
a processor; and
a memory connected to or built in the processor,
wherein the processor
acquires a representative image corresponding to a virtual viewpoint moving image generated based on a plurality of captured images obtained by imaging an imaging region and a plurality of pieces of viewpoint information, based on the plurality of captured images and the plurality of pieces of viewpoint information, and
outputs data for displaying the representative image on a screen on which a plurality of images are displayed.

19. An image processing method comprising:
acquiring a representative image corresponding to a virtual viewpoint moving image generated based on a plurality of captured images obtained by imaging an imaging region and a plurality of pieces of viewpoint information, based on the plurality of captured images and the plurality of pieces of viewpoint information; and
outputting data for displaying the representative image on a display in a size different from the virtual viewpoint moving image.

20. A program for causing a computer to execute a process comprising:
acquiring a representative image corresponding to a virtual viewpoint moving image generated based on a plurality of captured images obtained by imaging an imaging region and a plurality of pieces of viewpoint information, based on the plurality of captured images and the plurality of pieces of viewpoint information; and
outputting data for displaying the representative image on a display in a size different from the virtual viewpoint moving image.
